(19) Europäisches Patentamt / European Patent Office / Office européen des brevets

(11) **EP 3 326 782 B1**

(12) **FASCICULE DE BREVET EUROPEEN**

(45) Date de publication et mention
de la délivrance du brevet:
**15.07.2020   Bulletin 2020/29**

(51) Int Cl.:
***B29C 51/34*** *(2006.01)*        ***B65D 1/26*** *(2006.01)*

(21) Numéro de dépôt: **17204109.7**

(22) Date de dépôt: **28.11.2017**

(54) **POTS À CONTRE-DÉPOUILLE, MOULES OUVRANTS, MACHINES DE FORMAGES ET LIGNES DE FABRICATION DE POTS À CONTRE-DÉPOUILLE**

HINTERSCHNITTENE TÖPFE, FORMEN, FORMVORRICHTUNGEN UND PRODUKTIONSLINIEN ZUM HERSTELLEN VON HINTERSCHNITTENEN TÖPFE

UNDERCUT POTS, MOULDS, MOULDING APPARATOUSES AND PRODUCTION LINES FOR MAKING UNDERCUT POTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.11.2016   FR 1661577**

(43) Date de publication de la demande:
**30.05.2018   Bulletin 2018/22**

(73) Titulaire: **SYNERLINK**
**95650 Puiseux-Pontoise (FR)**

(72) Inventeurs:
• **JEGO, Fabien**
**92600 Asnieres sur Seine (FR)**
• **JACQUEMIN, Christian**
**78700 Conflans Sainte Honorine (FR)**
• **LARMARAUD, Jean Albert**
**78480 Verneuil sur Seine (FR)**
• **CHAUVET, Guy**
**78600 Maison Laffitte (FR)**

(74) Mandataire: **Derambure Conseil**
**66, rue de la Chaussée d'Antin**
**75009 Paris (FR)**

(56) Documents cités:
**EP-A1- 1 386 839     FR-A- 1 264 686**
**FR-A1- 2 318 790     US-B1- 6 324 819**

• **DATABASE WPI Week 200026 Thomson Scientific, London, GB; AN 2000-297362 XP002774148, -& JP 2000 085004 A (SUMITOMO CHEM CO LTD) 28 mars 2000 (2000-03-28)**
• **DATABASE WPI Week 198750 Thomson Scientific, London, GB; AN 1987-352528 XP002774149, -& JP S62 256630 A (TOYODA GOSEI KK) 9 novembre 1987 (1987-11-09)**

**Description**

L'invention concerne le domaine des pots à contre-dépouille ainsi que la fabrication de tels pots.

L'invention a plus précisément pour objet un moule ouvrant et une machine de formage de tels pots à contre-dépouille ainsi qu'une ligne de fabrication de tels pots à contre-dépouille.

Un pot tel que celui considéré comprend de manière générale une paroi de fond ainsi qu'une paroi latérale fermée sur elle-même et reliée à la paroi de fond, la paroi latérale et la paroi de fond comportant une surface intérieure définissant un intérieur de pot ainsi qu'une surface extérieure opposée à la surface intérieure. Le pot comprend usuellement une ouverture donnant accès à l'intérieur de pot, ladite ouverture étant apte à être recouverte par une fermeture de dessus pour isoler l'intérieur du pot. L'ouverture peut être entourée par une collerette de sorte à permettre le scellage du pot au moyen d'une fermeture supérieure.

Un tel pot est typiquement destiné à contenir un contenu homogène ou non, présentant un état d'ensemble plus ou moins fluide, comportant éventuellement des morceaux plus ou moins solides. Un tel contenu est par exemple un produit lacté ou un dessert, cette liste n'étant pas limitative.

Ainsi par exemple, l'invention trouve notamment une application dans la production et la distribution de produits laitiers frais ou ultra-frais tels que yaourts et assimilés, crèmes dessert, glaces et assimilés, mais également des produits fromagers, des compotes... L'invention s'applique également dans la production et distribution de produits de natures et/ou de destinations différentes mais que l'on peut considérer comme analogues au regard de la forme de leur contenants.

Un tel pot est usuellement réalisé par formage sur une ligne de fabrication de pots d'une feuille plastique thermoformable, par cycle, par poste et par groupe de pots. Une telle ligne de fabrication comporte ainsi des moyens d'amenée d'une feuille de matériau de formage à partir d'une bobine d'alimentation. La feuille, enroulée autour de la bobine, est déroulée longitudinalement, chauffée et amenée en contact avec la face supérieure des moules pour être mise en forme. Le pot mis en forme est ensuite traité sur différents postes, équipés de moyens de dosage du contenu des pots, d'outillages de soudure d'une feuille d'opercule et de découpe finale par exemple.

L'invention vise en particulier de tel pots avec une forme en contre dépouille, aussi appelés pots non-démoulables. De tels pots comportent usuellement un « col » en partie supérieure du moule, de dimension inférieure à un « ventre » du pot. De tels pots présentent un aspect attractif pour le consommateur par leur forme particulière.

Pour extraire de tels pots du moule de formage, il est nécessaire d'employer un moule de formage ouvrant comportant un premier et un second sous-moule adaptés pour être déplacés selon une direction de démoulage entre une position fermée dans laquelle le premier sous-moule et le second sous-moule sont en contacts mutuels et une position ouverte dans laquelle lesdits sous-moules sont distants l'un de l'autre. De même, différents outils le long d'une chaîne de fabrication de tels pots doivent être adaptés de sorte à pouvoir être ouverts, par exemple un dispositif de scellage de pots suivant le dispositif de formage de pots doit usuellement être pourvu de contre-électrodes ouvrantes adaptées pour venir entourer la collerette du pot.

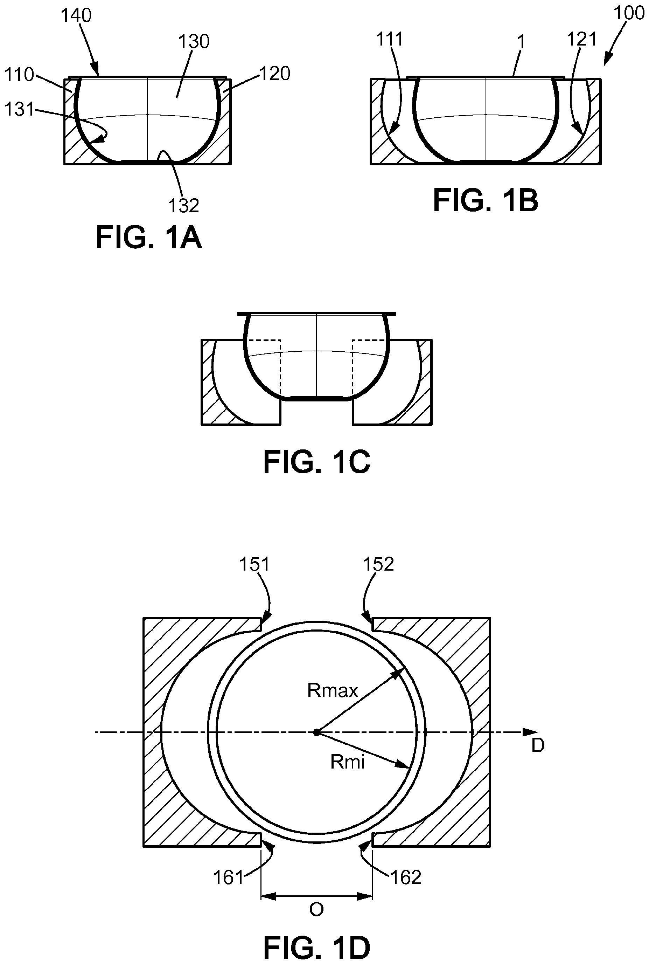

Les figures 1A à 1D illustrent de tels pots de l'art antérieur formés dans des moules ouvrants en positions fermées (figure 1A) et ouvertes (figure 1B, 1C et 1D). La figure 1D illustre en particulier lesdits pots et moules selon une vue de dessus.

Comme on peut le voir sur la figure 1D, le moule ouvrant présente un encombrement longitudinal important en position ouverte pour permettre le démoulage complet du pot. Pour éviter les interférences entre les outillages, notamment entre plusieurs rangées de moules ouvrants, un espace longitudinal E suffisamment important doit de fait être prévu entre les rangées de moules ouvrants de la ligne de fabrication de pots.

Il en résulte une perte importante des portions de la feuille de matériau de formage entre les rangées de moules ouvrants ainsi que du matériau d'opercule le cas échéant.

Plusieurs solutions ont été proposées pour remédier à ce problème.

Une première solution consiste à étirer périodiquement la feuille de sorte que à ce que la portion de feuille disposée à la verticale de l'espace E ait une épaisseur de matière sensiblement plus faible que la portion utilisée pour le formage du pot, ce qui réduit la quantité de matière perdue.

Une autre solution est décrite par exemple dans les documents FR 2843094 et EP1275580 et consiste à découper la feuille de matériau de formage, et le cas échéant le matériau d'opercule, en tronçons à raison d'autant de tronçons que de rangées de pots à fabriquer. La largeur des tronçons et le pas séparant lesdits tronçons sont réglés pour minimiser la perte de matériau sur les différents outillages de la chaîne de fabrication.

Encore une autre solution est décrite dans le document WO2011114043 par exemple et permet de réduire encore davantage la perte de matériau en découpant et préparant une pastille unique de matériau de formage pour chaque pot fabriqué.

Des autres solutions sont proposées dans FR1264686A, FR2318790A1, JP2000085004A, JPS62256630A, US6324819B1 et EP1386839A1.

De tels procédé imposent toutefois des contraintes importantes sur la chaîne de fabrication et sont complexes à mettre en œuvre. Il est nécessaire d'ajouter des dispositifs spécifiques de préparation et de déplacement des tronçons ou pastilles de matériaux de formage et d'operculage tandis que les différents postes de chauffage, formage, dosage, scellage et découpe doivent tous être adaptés de manière important à la gestion des tronçons ou pastilles de matériaux.

Il en résulte que les chaînes de fabrication de pots en contre-dépouilles telles que connues de l'art antérieur sont particulièrement couteuses. Ces chaînes de fabrication sont par ailleurs très spécifiques et spécialisées dans la fabrication d'une gamme restreinte à un type particulier de pots en contre-dépouille.

Il existe ainsi un besoin pour des chaînes de fabrication de pots en contre-dépouilles moins couteuses et plus versatiles, tout en conservant une perte limité de matériau lors de la fabrication de pots en contre-dépouilles.

A cet effet l'invention a pour premier objet un moule, une machine, une ligne et un procédé selon les revendications indépendantes 1, 8, 11 et 14 pour fabriquer un pot à contre-dépouille comportant une paroi de fond ainsi qu'une paroi latérale fermée sur elle-même et reliée à la paroi de fond, la paroi latérale et la paroi de fond comportant une surface intérieure définissant un intérieur de pot ainsi qu'une surface extérieure opposée à la surface intérieure, le pot comprenant en outre une ouverture donnant accès à l'intérieur de pot, ladite ouverture étant apte à être recouverte par une fermeture de dessus pour isoler l'intérieur du pot, l'ouverture s'étendant selon un plan horizontal et définissant une direction verticale, perpendiculaire au plan horizontal, passant par un barycentre de l'ouverture, et orientée depuis la paroi de fond vers l'ouverture.

Le pot est tel que la surface extérieure de la paroi latérale du pot présente une forme de contre-dépouille non-symétrique de révolution autour de la direction verticale, ladite surface extérieure présentant au moins un plan vertical de démoulage tel qu'une valeur de contre-dépouille du pot à des extrémités latérales respectives du pot, d'écartement latéral maximal de la surface extérieure par rapport au plan vertical de démoulage, est inférieur à une valeur de contre-dépouille maximale du pot sur la circonférence de la surface extérieure du pot.

Selon une réalisation, le plan vertical de démoulage est défini par la direction verticale et une direction de démoulage du plan horizontal, et est tel qu'un écartement latéral $E(t,z) = R(t,z)\sin(\theta(t,z))$ de la surface extérieure par rapport à la direction de démoulage, est une fonction

> convexe pour t variant de 0 à 1, avec une valeur maximale d'écartement latéral $DM1(t1,z) = \max_{t \in [0,1]} E(t,z)$ à une position $t1(z)$ de première section d'ouverture de moule, et
> concave pour t variant de 1 à 2, avec une valeur maximal d'écartement latéral $DM2(t2,z) = \max_{t \in [1,2]}(-E(t,z))$ à une position $t2(z)$ de deuxième section d'ouverture de moule, où
> z est une distance à la paroi de fond d'un point de la surface extérieure de la paroi latérale, selon la

direction verticale,

$t \in [0,2]$ est une position circonférentielle d'un point de la surface extérieure telle que $t = 0$ à une intersection entre la surface extérieure et la direction de démoulage, $t = 1$ à une intersection entre la surface extérieure et la direction opposée à la direction de démoulage et t varie de 0 à 2 en parcourant une circonférence complète de la surface extérieure autour de la direction verticale,

$\theta(t,z)$ est un angle orienté dans le plan horizontal par rapport à la direction de démoulage d'un point de la surface extérieure à la position t et la hauteur z, et $R(t,z)$ est une distance à la direction verticale, dans le plan horizontal, d'un point de la surface extérieure à la position t et la hauteur z, et la surface extérieure de la paroi latérale présente :

- une hauteur $z1 = argmax_z(DM1(t1(z),z))$ d'écartement maximal de première contre-dépouille à l'endroit de la première section d'ouverture de moule,
- une hauteur $z1' = argmin_{z>z1}(DM1(t1(z),z))$ d'écartement minimal de première contre-dépouille à l'endroit de la première section d'ouverture de moule,
- une hauteur $z2 = argmax_z(DM2(t2(z),z))$ d'écartement maximal de deuxième contre-dépouille à l'endroit de la deuxième section d'ouverture de moule,
- une hauteur $z2' = argmin_{z>z2}(DM2(t2(z),z))$ d'écartement minimal de deuxième contre-dépouille à l'endroit de la deuxième section d'ouverture de moule.

Selon une réalisation :

- un débord de première contre-dépouille à l'endroit de la première section d'ouverture de moule $D1(t1) = R(t1(z1),z1) - R(t1(z1'),z1')$ est inférieur à un débord maximal de première contre-dépouille $D1_{max} = \max_t(R(t,z1)) - \min_t(R(t,z1'))$ sur la circonférence de la surface extérieure du pot, et
- un débord de deuxième contre-dépouille à l'endroit de la deuxième section d'ouverture de moule $D2(t2) = R(t2(z1),z2) - R(t2(z2'),z2')$ est inférieur à un débord maximal de deuxième contre-dépouille $D2_{max} = \max_t(R(t,z2)) - \min_t(R(t,z2'))$ sur la circonférence de la surface extérieure du pot.

Selon une réalisation, la surface extérieure de la paroi latérale du pot est telle que,

- une distance longitudinale de première contre-dépouille sur une première moitié de pot $D1_{long}(t) = F(c1(t),z1) - F(t,z1')$ pour $t \in [0, t1(z1')]$ présente un minimum local à l'endroit de la première section d'ouverture de moule $t = t1(z1')$,
- une distance longitudinale de première contre-dépouille sur une deuxième moitié de pot $D1_{long}(t) = F(c2(t),z1) - F(t,z1')$ pour $t \in [t1(z1'),1]$ présente un minimum local à l'endroit de la première section d'ouverture de moule t = t1(z1'),

- une distance longitudinale de deuxième contre-dépouille sur une deuxième moitié de pot $D2_{long}(t) = F(c3(t),z2) - F(t,z2')$ pour $t \in [1,t2(z2')]$ présente un minimum local à l'endroit de la deuxième section d'ouverture de moule t = t2(z2'),

- une distance longitudinale de deuxième contre-dépouille sur une première moitié de pot $D2_{long}(t) = F(c4(t),z2) - F(t, z2')$ pour $t \in [t2(z2'),2]$ présente un minimum local à l'endroit de la deuxième section d'ouverture de moule t = t2(z2'),

où

$F(t,z) = R(t,z)\cos(\theta(t,z))$ est un écartement longitudinal de la surface extérieure de ladite paroi latérale selon la direction de démoulage,

c1(t) est une conversion longitudinale de position de première contre-dépouille sur une première moitié de pot telle que $\sin(\theta(c1(t),z1))$ $R(c1(t),z1) = \sin(\theta(t,z1'))$ $R(t,z1')$ pour $t \in [0,t1(z1')]$,

c2(t) est une conversion longitudinale de position de première contre-dépouille sur une deuxième moitié de pot telle que $\sin(\theta(c2(t),z1))R(c2(t),z1) = \sin(\theta(t,z1'))$ $R(t,z1')$ pour $t \in [t1(z1'),1]$,

c3(t) est une conversion longitudinale de position de deuxième contre-dépouille sur une deuxième moitié de pot telle que $\sin(\theta(c3(t),z2))R(c4(t),z2) = \sin(\theta(t,z2'))R(t,z2')$ pour $t \in [1,t2(z2')]$, et

c4(t) est une conversion longitudinale de position de deuxième contre-dépouille sur une première moitié de pot telle que $\sin(\theta(c4(t),z2))R(c3(t),z2) = \sin(\theta(t,z2'))R(t,z2')$ pour $t \in [t2(z2'),2]$.

Selon une réalisation :

- une distance latérale de première contre-dépouille $D1_{lat}(t) = E(d(t),z1) - E(t, z1')$ présente un minimum local à l'endroit de la première section d'ouverture de moule t = t1(z1'), et

- une distance latérale de deuxième contre-dépouille $D2_{lat}(t) = E(d(t),z2) - E(t, z2')$ présente un minimum local à l'endroit de la deuxième section d'ouverture de moule t = t2(z2'),

où

d1(t) est une conversion latérale de position de première contre-dépouille telle que $d1(t) = arg\text{-}max_{t'}(\theta(t',z1) = \theta(t,z1'))$, et

d2(t) est une conversion latérale de position de deuxième contre-dépouille telle que $d2(t) = arg\text{-}max_{t'}(\theta(t',z2) = \theta(t,z2'))$.

Selon une réalisation, la distance de première contre-dépouille à l'endroit de la première section d'ouverture de moule $D1(t1)$ et la distance de deuxième contre-dépouille à l'endroit de la deuxième section d'ouverture de moule $D2(t2)$ sont respectivement inférieures à un quart de l'écartement maximal de première contre-dépouille à l'endroit de la première section d'ouverture de moule DM1(t1,z1) et à un quart de l'écartement maximal de deuxième contre-dépouille à l'endroit de la deuxième section d'ouverture de moule DM2(t2,z2), de préférence respectivement inférieures à un dixième de l'écartement maximal de première contre-dépouille à l'endroit de la première section d'ouverture de moule DM1(t1,z1) et à un quart de l'écartement maximal de deuxième contre-dépouille à l'endroit de la deuxième section d'ouverture de moule DM2(t2,z2).

Selon une réalisation, la première section d'ouverture de moule et la deuxième section d'ouverture de moule sont sensiblement opposées par rapport à l'axe longitudinal.

Selon une réalisation, la première section d'ouverture de moule et la deuxième section d'ouverture de moule sont à angle droit par rapport à la direction de démoulage selon la direction verticale, de telle sorte que $\theta(t1(z), z) = \pi/2$ et $\theta(t2(z), z) = -\pi/2$ sur toute hauteur z du pot.

Selon une réalisation, l'ouverture est entourée d'une collerette plane s'étendant dans le plan horizontal, adaptée pour permettre la fixation d'une fermeture de dessus sur le pot de sorte à fermer de manière étanche le pot.

Selon une réalisation, le pot est en matière plastique.

Selon une réalisation, l'ouverture du pot est scellée par une fermeture de dessus telle qu'un opercule souple en matière plastique.

L'invention a également pour objet un moule ouvrant spécialement destiné à être utilisé dans une machine de formage pour mettre en forme au moins un pot tel que décrit ci-avant, comportant un premier sous-moule et un second sous-moule, lesdits sous-moules étant adaptés pour être déplacés selon une direction de démoulage entre une position fermée dans laquelle le premier sous-moule et le second sous-moule sont en contacts mutuels et une position ouverte dans laquelle lesdits sous-moules sont distants l'un de l'autre, lesdits premier sous-moule et second sous-moule formant au moins une cavité intérieure dans la position fermée du moule, ladite au moins une cavité étant définie par une surface intérieure de cavité comprenant une surface intérieure du premier sous-moule et une surface intérieure du second sous-moule, la cavité étant ouverte à l'endroit d'une surface supérieure du moule ouvrant, par une ouverture supérieure s'étendant selon un plan horizontal comprenant la direction de démoulage, l'ouverture supérieure définissant une direction verticale de la cavité, perpendiculaire au plan horizontal, passant par un barycentre de ladite ouverture supérieure, et orientée depuis un fond de cavité vers l'ouverture supérieure.

le moule ouvrant est tel que la surface intérieure de cavité du moule ouvrant dans la position fermée présente une forme de contre-dépouille non-symétrique de révolution autour de la direction verticale, ladite surface intérieure présentant un plan vertical de démoulage comprenant la direction verticale ainsi que la direction de démoulage et étant telle qu'une valeur de contre-dépouille du moule à des extrémités latérales respectives de la cavité intérieure du moule, d'écartement latéral maximal de la surface intérieure par rapport au plan vertical de démoulage, est inférieure à une valeur de contre-dépouille maximale du moule sur la circonférence de la surface intérieure de la cavité intérieure.

Selon une réalisation, le plan vertical de démoulage est tel qu'un écartement latéral $E(t,z) = R(t,z)\sin(\theta(t,z))$ de la surface intérieure du moule ouvrant dans la position fermée par rapport à la direction de démoulage, est une fonction

convexe pour t variant de 0 à 1, avec une valeur maximale d'écartement latéral $DM1(t1,z) = \max_{t \in [0,1]} E(t,z)$ à une position $t1(z)$ de première section d'ouverture de moule correspondant à un endroit de contact entre des premières surfaces d'ouverture respectives du premier sous-moule et du deuxième sous-moule, et

concave pour t variant de 1 à 2, avec une valeur maximal d'écartement latéral $DM2(t2,z) = \max_{t \in [1,2]}(-E(t,z))$ à une position $t2(z)$ de deuxième section d'ouverture de moule correspondant à un endroit de contact entre des deuxième surfaces d'ouverture respectives du premier sous-moule et du deuxième sous-moule, où

z est une distance au fond de cavité d'un point de la surface intérieure de la cavité, selon la direction verticale,

$t \in [0,2]$ est une position circonférentielle d'un point de la surface intérieure telle que $t = 0$ à une intersection entre la surface intérieure et la direction de démoulage, $t = 1$ à une intersection entre la surface intérieure et la direction opposée à la direction de démoulage et t varie de 0 à 2 en parcourant une circonférence complète de la surface intérieure autour de la direction verticale,

$\theta(t,z)$ est un angle orienté dans le plan horizontal par rapport à la direction de démoulage d'un point de la surface intérieure à la position t et la hauteur z, et

$R(t,z)$ est une distance à la direction verticale, dans le plan horizontal, d'un point de la surface intérieure à la position t et la hauteur z,

et la surface intérieure de la cavité présente :

- une hauteur $z1 = argmax_z(DM1(t1(z),z))$ d'écartement maximal de première contre-dépouille à l'endroit de la première section d'ouverture de moule,
- une hauteur $z1' = argmin_{z>z1}(DM1(t1(z),z))$ d'écartement minimal de première contre-dépouille à l'endroit de la première section d'ouverture de moule,
- une hauteur $z2 = argmax_z(DM2(t2(z),z))$ d'écartement maximal de deuxième contre-dépouille à l'endroit de la deuxième section d'ouverture de moule,
- une hauteur $z2' = argmin_{z>z2}(DM2(t2(z),z))$ d'écartement minimal de deuxième contre-dépouille à l'endroit de la deuxième section d'ouverture de moule.

Selon une réalisation :

- un débord de première contre-dépouille à l'endroit de la première section d'ouverture de moule $D1(t1) = R(t1(z1),z1) - R(t1(z1'),z1')$ est inférieur à un débord maximal de première contre-dépouille $D1_{max} = max_t(R(t,z1)) - min_t(R(t,z1'))$ sur la circonférence de la surface intérieure de la cavité, et
- un débord de deuxième contre-dépouille à l'endroit de la deuxième section d'ouverture de moule $D2(t2) = R(t2(z1),z2) - R(t2(z2'),z2')$ est inférieur à un débord maximal de deuxième contre-dépouille $D2_{max} = max_t(R(t,z2)) - min_t(R(t,z2'))$ sur la circonférence de la surface intérieure de la cavité.

Selon une réalisation, la surface intérieure de la cavité est telle que,

- une distance longitudinale de première contre-dépouille sur une première moitié de cavité $D1_{long}(t) = F(c1(t),z1) - F(t,z1')$ pour $t \in [0,t1(z1')]$ présente un minimum local à l'endroit de la première section d'ouverture de moule $t = t1(z1')$,
- une distance longitudinale de première contre-dépouille sur une deuxième moitié de cavité $D1_{long}(t) = F(c2(t),z1) - F(t,z1')$ pour $t \in [t1(z1'),1]$ présente un minimum local à l'endroit de la première section d'ouverture de moule $t = t1(z1')$,
- une distance longitudinale de deuxième contre-dépouille sur une deuxième moitié de cavité $D2_{long}(t) = F(c3(t),z2) - F(t,z2')$ pour $t \in [1,t2(z2')]$ présente un minimum local à l'endroit de la deuxième section d'ouverture de moule $t = t2(z2')$,
- une distance longitudinale de deuxième contre-dépouille sur une première moitié de cavité $D2_{long}(t) = F(c4(t),z2) - F(t,z2')$ pour $t \in [t2(z2'),2]$ présente un minimum local à l'endroit de la deuxième section d'ouverture de moule $t = t2(z2')$,

où

$F(t,z) = R(t,z)\cos(\theta(t,z))$ est un écartement longitudinal de la surface intérieure de la cavité selon la direction de démoulage,

c1(t) est une conversion longitudinale de position de première contre-dépouille sur une première moitié de cavité telle que $\sin(\theta(c1(t),z1))R(c1(t),z1) = \sin(\theta(t,z1'))R(t,z1')$ pour $t \in [0,t1(z1')]$,

c2(t) est une conversion longitudinale de position de première contre-dépouille sur une deuxième moitié de cavité telle que $\sin(\theta(c2(t),z1))R(c2(t),z1) = \sin(\theta(t,z1'))R(t, z1')$ pour $t \in [t1(z1'),1]$,

c3(t) est une conversion longitudinale de position de deuxième contre-dépouille sur une deuxième moitié de cavité telle que $\sin(\theta(c3(t),z2))R(c4(t),z2) = \sin(\theta(t,z2'))R(t,z2')$ pour $t \in [1,t2(z2')]$, et

c4(t) est une conversion longitudinale de position de deuxième contre-dépouille sur une première moitié de cavité telle que $\sin(\theta(c4(t),z2))R(c3(t),z2) = \sin(\theta(t,z2'))R(t,z2')$ pour $t \in [t2(z2'),2]$.

Selon une réalisation :

- une distance latérale de première contre-dépouille $D1_{lat}(t) = E(d(t),z1) - E(t, z1')$ présente un minimum local à l'endroit de la première section d'ouverture de moule t = t1(z1'), et
- une distance latérale de deuxième contre-dépouille $D2_{lat}(t) = E(d(t),z2) - E(t,z2')$ présente un minimum local à l'endroit de la deuxième section d'ouverture de moule t = t2(z2'),

où

d1(t) est une conversion latérale de position de première contre-dépouille telle que $d1(t) = arg\text{-}max_{t'}(\theta(t',z1) = \theta(t,z1'))$, et

d2(t) est une conversion latérale de position de deuxième contre-dépouille telle que $d2(t) = arg\text{-}max_{t'}(\theta(t',z2) = \theta(t,z2'))$.

Selon une réalisation, lesdits premier sous-moule et second sous-moules forment, dans la position fermée du moule, une pluralité de cavités intérieures alignées selon une direction longitudinale.

Selon une réalisation, dans la position ouverte, le premier sous-moule et le second sous-moule sont distant l'un de l'autre, selon la direction de démoulage d'une distance d'ouverture O comprise entre une et trois fois une somme entre une distance maximale de contre-dépouille de la paroi latérale selon la direction de démoulage et une distance maximale de contre-dépouille de la paroi latérale selon la direction opposée la direction de démoulage.

L'invention a encore pour objet une machine de formage comportant au moins un moule ouvrant tel que décrit ci-avant.

Selon une réalisation, la machine comporte une pluralité de moules ouvrants alignés pour former au moins deux rangées de moules s'étendant chacune selon une direction longitudinale perpendiculaire à la direction de démoulage desdits moules ouvrants, chaque rangée de moules comportant un ou plusieurs moules ouvrants juxtaposés dans la direction longitudinale, lesdites rangées de moules étant arrangées avec une période spatiale p selon la direction de démoulage, dans laquelle ladite période spatiale p est inférieure à une fois et demi une dimension maximale de la cavité intérieure d'un moule ouvrant selon la direction de démoulage.

Selon une réalisation, la machine comporte en outre au moins un dispositif de blocage d'écartement des moules ouvrant mis sous pression, ledit dispositif de blocage d'écartement comportant une première came et une deuxième came, lesdites première et deuxième cames venant respectivement en contact avec le premier sous-moule et le second sous-moule d'un moule ouvrant dans la position fermée de sorte à empêcher un mouvement relatif desdits sous-moules selon la direction de démoulage, lesdites première et deuxième cames venant en contact avec lesdits premier et deuxième sous-moules par un côté opposé à la surface supérieure dudit moule ouvrant selon la direction verticale de sorte à ne pas dépasser de la surface supérieure dudit moule ouvrant dans la direction verticale.

L'invention a également pour objet une ligne de fabrication de pots par formage, comportant une machine de formage telle que décrite ci-avant ainsi que des moyens d'amenée d'une feuille de matériau de formage à partir d'au moins une bobine d'alimentation, les moyens d'amenée de ladite feuille de matériau de formage étant adaptés pour amener une portion de feuille de matériau en contact avec la face supérieure des moules ouvrants, ladite portion de feuille de matériau étant reliée de manière continue à la bobine d'alimentation.

Selon une réalisation, ladite portion de feuille de matériau en contact avec la face supérieure des moules ouvrants couvre au moins au moins deux rangées de moules ouvrant de la machine de formage.

Selon une réalisation, la ligne de fabrication comporte en outre des moyens d'amenée d'une feuille d'opercule à partir d'au moins une bobine d'alimentation, lesdits moyens d'amenée de feuille d'opercule étant adaptés pour amener une portion de feuille d'opercule en regard de l'ouverture de rangées de pots mis en forme par la machine de formage de pots, lesdits pots ayant, le cas échéant, leurs collerettes reliées entre elles par la portion de feuille de matériaux, ladite portion de feuille d'opercule étant reliée de manière continue à la bobine d'alimentation,

la ligne comportant en outre un dispositif de scellage de pots adaptée pour venir mettre en contact et sceller ladite portion de feuille d'opercule avec la collerette des pots.

L'invention a enfin pour objet un procédé de fabrication de pots par formage, dans lequel :

- on dispose d'une ligne de fabrication de pot par formage telle que décrite ci-avant,
- on amène, à partir de la bobine d'alimentation, une portion de feuille de matériau en contact avec la face supérieure d'une pluralité de moules ouvrants alignés pour former au moins deux rangées de moules s'étendant chacune selon une direction longitudinale perpendiculaire à la direction de démoulage desdits moules ouvrants, ladite portion de feuille de matériau étant reliée de manière continue à la bobine d'alimentation,

- on forme les pots dans lesdits moules ouvrants.

Par rapport à l'état de la technique antérieure, les avantages de l'invention sont notamment de réduire la distance d'ouverture d'un moule ouvrant fabriquant un pot selon l'invention et donc de permettre l'utilisation de moyens classiques d'amenée d'une feuille de matériau de formage, c'est-à-dire d'un dispositif amenant la feuille de matériau de formage de manière continue de la bobine d'alimentation au moule ouvrants, ceci sans pour autant générer de perte importante de la feuille de matériau de formage entre les rangées de moules ouvrante ni requérir une prédécoupe de la feuille de matériau de formage. Le coût et la complexité d'une ligne de fabrication de pots avec contre-dépouille peut ainsi être sensiblement réduit. Les pots avec contre-dépouille selon l'invention présentent par ailleurs la majorité des avantages, notamment esthétiques, recherchés chez les pots avec contre-dépouille de l'art antérieur. En outre, une ligne de fabrication de pot sans contredépouille peut être adaptée à la fabrication de pots avec contre-dépouille de manière aisée, rapide et à faible coût.

On décrit maintenant brièvement les figures des dessins.

Les figures 1A, 1B, 1C et 1D illustrent un pot de l'art antérieur ainsi qu'un moule ouvrant de l'art antérieur comportant des premier et deuxième sous-moules au cours d'une opération de démoulage du pot une fois formé, le moule ouvrant passant de la position fermée (figure 1A) à la position ouverte (figures 1B, 1C, 1D).

Les figures 2A, 2B, 2C et 2D illustrent différentes sections d'un pot selon un mode de réalisation de l'invention.

Les figures 3A, 3B, 3C et 3D représentent le pot des figures 2A-2D ainsi qu'un moule ouvrant selon un mode de réalisation de l'invention au cours d'une opération de démoulage du pot une fois formé, le moule ouvrant passant de la position fermée (figure 3A) à la position ouverte (figures 3B, 3C, 3D).

Les figures 4A, 4B et 4C illustrent une variante du pot des figures 2A-2D en vue de perspective (figure 4A) et selon deux sections (figures 4B et 4C).

La figure 4D illustre un premier sous-moule d'un moule ouvrant selon l'invention spécialement destiné à former le pot des figures 4A-4C.

Les figures 5A, 5B, 5C et 5D illustrent une autre variante du pot des figures 2A-2D selon trois sections (figures 5A, 5B et 5C) et en vue de perspective (figure 5D).

La figure 6A illustre une section de d'un pot selon l'invention similaire à la section de la figure 2B et la figure 6B est une courbe représentant l'écartement latéral $E(t, z)$ de la surface extérieure d'un pot selon un mode de réalisation de l'invention ou de la surface intérieur d'une cavité d'un moule ouvrant selon un mode de réalisation de l'invention, pour une hauteur $z$ fixée et en fonction de la position $t$ sur la circonférence de la surface extérieure de la paroi latérale.

La figure 7A illustre une section d'un pot selon l'invention similaire à la section de la figure 2B, ainsi qu'un cercle en pointillé de rayon égale au rayon maximal de la paroi latérale du pot

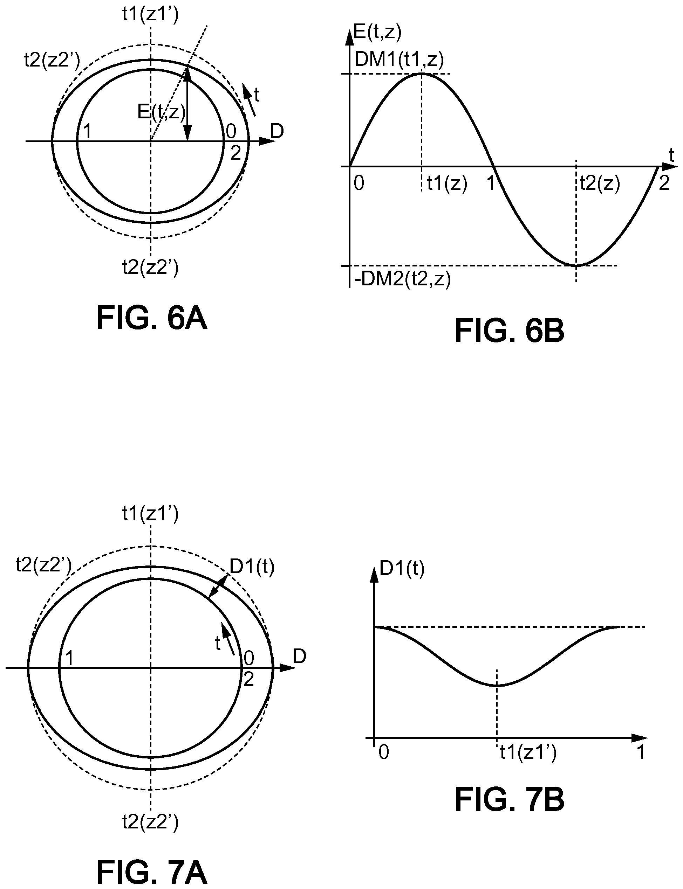

La figure 7B est une courbe représentant le débord de première contre-dépouille de la surface extérieure d'un pot selon un mode de réalisation de l'invention ou de la surface intérieur d'une cavité d'un moule ouvrant selon un mode de réalisation de l'invention, en fonction de la position $t$ sur une moitié de la circonférence de la surface extérieure du pot ou de la surface intérieur de la cavité du moule ouvrant. La courbe en pointillé de la figure 7B représente le débord de première contre-dépouille de la surface extérieure d'un pot selon l'art antérieur des figures 1A-1D ou de la surface intérieur d'une cavité d'un moule ouvrant selon l'art antérieur des figures 1A-1D.

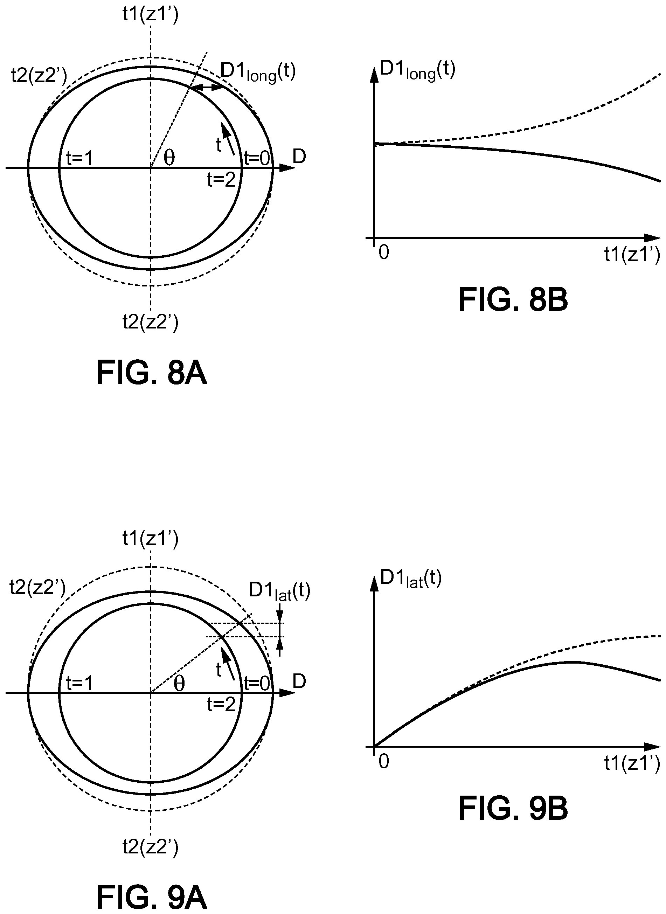

La figure 8A illustre une section de pot similaire à la section de la figure 7A et la figure 8B est une courbe représentant la distance longitudinale de première contre-dépouille en fonction de la position $t$ sur une première moitié de d'un pot selon un mode de réalisation de l'invention ou d'une cavité d'un moule ouvrant selon un mode de réalisation de l'invention. La courbe en pointillé de la figure 8B représente la distance longitudinale de première contre-dépouille d'un pot selon l'art antérieur des figures 1A-1D ou de la surface intérieur d'une cavité d'un moule ouvrant selon l'art antérieur des figures 1A-1D.

La figure 9A illustre une section de pot similaire à la section de la figure 7A et la figure 9B est une courbe représentant la distance latérale de première contre-dépouille d'un pot selon un mode de réalisation de l'invention ou d'une cavité d'un moule ouvrant selon un mode de réalisation de l'invention. La courbe en pointillé de la figure 9B représente la distance latérale de première contre-dépouille d'un pot selon l'art antérieur des figures 1A-1D ou de la surface intérieur d'une cavité d'un moule ouvrant selon l'art antérieur des figures 1A-1D.

La figure 10 illustre une ligne de fabrication de pots par formage selon un mode de réalisation de l'invention.

Les figures 11A et 11B sont respectivement des vues en perspective et de côté d'une machine de formage selon un mode de réalisation de l'invention.

Ci-après un exposé détaillé de plusieurs modes de réalisation de l'invention assorti d'exemples et de référence aux dessins.

La figure 1A illustre un pot avec une forme en contre-dépouille selon un exemple de l'art antérieur. A la différence des pots démoulables qui présentent usuellement une forme de cylindre avec une courbe directrice plus ou moins complexe (cercle ou carré curviligne à coins arrondis) et une génératrice fréquemment verticale, la génératrice de la paroi latérale d'un pot en contre dépouille dans l'art antérieur peut présenter une forme plus complexe, par exemple un arc de cercle.

Comme on peut le voir sur la figure 1A, le pot 1 présente une forme symétrique de révolution autour d'une direction verticale Z. Plus précisément, le pot 1 comporte une paroi de fond 2 ainsi qu'une paroi latérale 3 fermée sur elle-même et reliée à la paroi de fond 2. La paroi latérale 3 et la paroi de fond 2 comportent une surface intérieure 4 ainsi qu'une surface extérieure 5 opposée à la surface intérieure 4. La surface intérieure 4 est formée en partie d'une surface intérieure de la paroi latérale et d'une surface intérieure de la paroi de fond. La surface intérieure 4 du pot définit un intérieur de pot 5 adapté pour accueillir le contenu du pot. Le pot comprend en outre une ouverture 6 donnant accès à l'intérieur de pot. L'ouverture 6 est apte à être recouverte par une fermeture de dessus 7 pour isoler l'intérieur du pot. La fermeture de dessus 7 est par exemple un opercule souple en matière plastique.

L'ouverture 6 s'étend selon un plan horizontal H et définit par ailleurs une direction verticale Z, perpendiculaire au plan horizontal H et passant par un barycentre de l'ouverture 6. La direction verticale Z est orientée depuis la paroi de fond 2 vers l'ouverture 6.

L'ouverture 6 peut en particulier être entourée d'une collerette plane 8 s'étendant dans le plan horizontal H. La collerette 8 peut être adaptée pour permettre la fixation de la fermeture de dessus 7 sur le pot 1 de sorte à fermer de manière étanche le pot 1.

Le pot est par exemple en matière plastique et peut notamment être réalisé par thermoformage d'une feuille de plastique comme détaillé ci-après.

Comme on peut le voir sur les figures 1A à 1C, le pot 1 est par exemple mis en forme au moyen d'un moule ouvrant 100. Un tel moule ouvrant 100 comporte un premier sous-moule 110 et un second sous-moule 120 qui sont adaptés pour être déplacés selon une direction de démoulage D du moule ouvrant entre une position fermée, illustrée sur la figure 1A, et une position ouverte, illustrée sur les figures 1B et 1C.

Dans la position fermée du moule ouvrant 100, le premier sous-moule 110 et le second sous-moule 120 forment ensemble au moins une cavité intérieure 130 du moule ouvrant.

La cavité intérieure 130 est définie par une surface intérieure de cavité 131 comprenant une surface intérieure du premier sous-moule 111 et une surface intérieure du second sous-moule 121. La cavité 130 est ouverte à l'endroit d'une surface supérieure 101 du moule ouvrant 100, par une ouverture supérieure 140.

L'ouverture supérieure 140 s'étend selon un plan horizontal H qui comprend la direction de démoulage D du moule. L'ouverture supérieure 140 définit par ailleurs une direction verticale de la cavité Z, perpendiculaire au plan horizontal H et passant par un barycentre de l'ouverture supérieure 140. La direction verticale Z est orientée depuis un fond de cavité 132 vers l'ouverture supérieure 140 du moule ouvrant 100.

Dans la position fermée, le premier sous-moule 110 et le second sous-moule 120 sont en contacts mutuels, d'une part, à l'endroit de premières surfaces d'ouverture respectives, et d'autre part à l'endroit de deuxièmes surfaces d'ouverture respectives. Les premières surfaces d'ouverture et les deuxièmes surfaces d'ouverture, sont placées de part et d'autre de l'ouverture supérieure 140 du moule ouvrant 100.

Dans la position ouverte, le premier sous-moule 110 et le second sous-moule 120 sont distants l'un de l'autre d'une distance d'ouverture O suffisante pour permettre d'extraire le pot formé du moule par déplacement relatif du moule par rapport au pot selon la direction verticale Z.

Le pot illustré sur les figures 1A à 1D présente un rayon maximal Rmax à l'endroit du « ventre » dudit pot et un rayon minimal Rmin à l'endroit du « col » dudit pot.

Comme cela est visible sur les figure 1B à 1D, du fait de la forme usuelle du pot à contre-dépouille, la distance d'ouverture O est sensiblement supérieure au débord de contre-dépouille $Dc$ = Rmax - Rmin. Plus précisément, pour un pot avec une symétrie de révolution tel que celui illustré sur les figures 1A à 1D, la distance d'ouverture O peut être exprimée comme

$$O = 2\sqrt{Rmax^2 - Rmin^2}.$$

Ainsi, lorsque le rayon maximal du pot, Rmax, devient grand devant le rayon du col du pot Rmin, la distance d'ouverture O tend vers une valeur proche du diamètre maximal du pot Rmax. De fait, comme on peut le voir sur la figure 1D, il est alors nécessaire de prévoir entre les rangées de moules ouvrants un écartement E proche de la dimension d'un pot et donc fortement supérieur à la valeur du débord de contre-dépouille $Dc$ = Rmax - Rmin des pots.

L'un des objectifs de la présente invention est de fournir un pot permettant de réduire la distance d'ouverture O entre les sous-moules du moule ouvrant dans la position ouverte et donc l'écartement E entre les rangées de moules ouvrants.

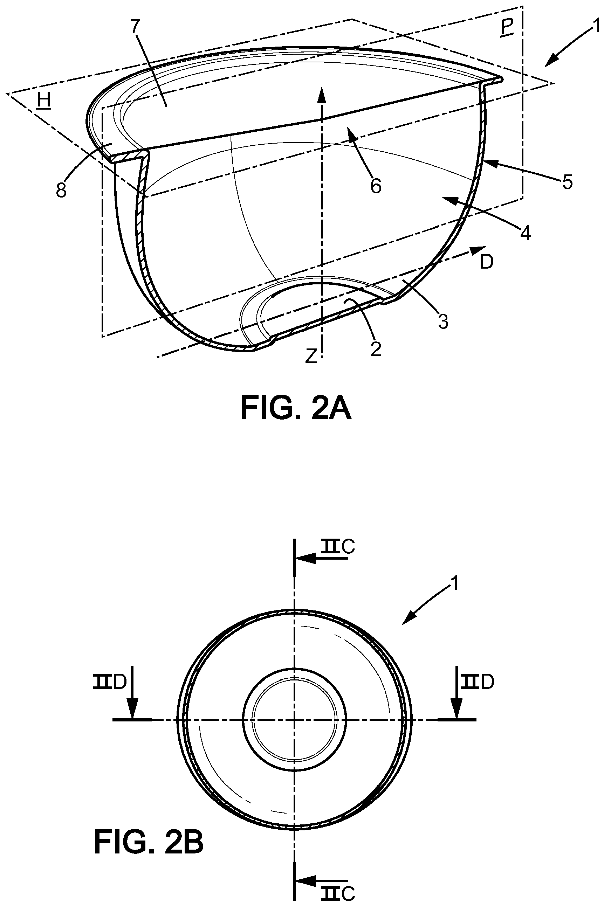

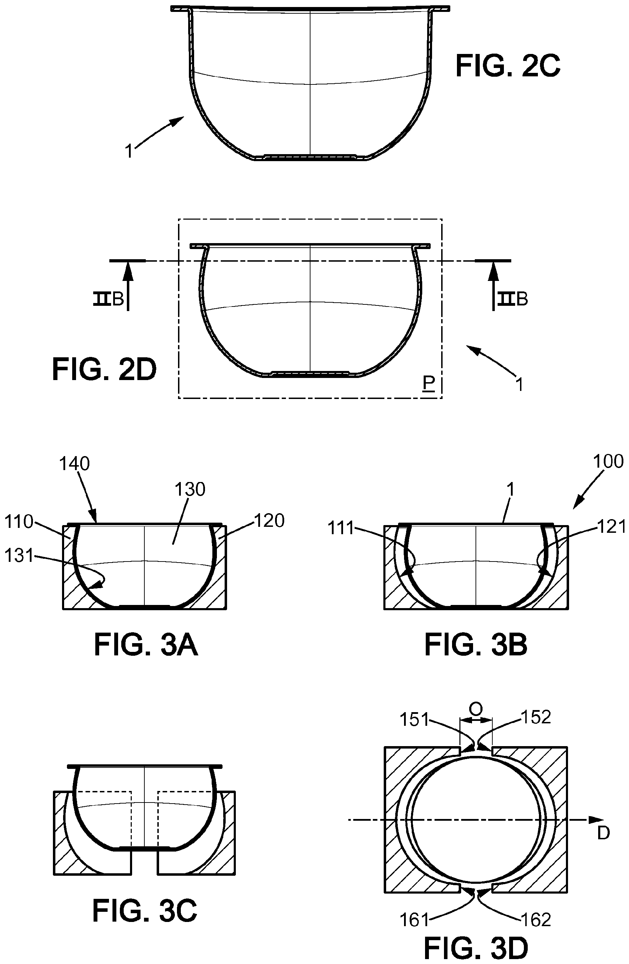

A cette fin, la figure 2A illustre un pot 1 selon un mode de réalisation de l'invention. Un tel pot 1 présente les même éléments constitutif que le pot de l'art antérieur illustré sur la figure 1A-1D, une paroi de fond 2, une paroi latérale 3, une surface intérieure 4 ainsi qu'une surface extérieure 5 opposée à la surface intérieure 4. La surface intérieure 4 du pot définit également un intérieur de pot et le pot comprend ici encore une ouverture 6 donnant accès à l'intérieur de pot et apte à être recouverte par une fermeture de dessus 7 pour isoler l'intérieur du pot. Le pot pouvant également comporter une collerette 8 telle que décrite ci-avant.

La forme de la surface extérieure 5 de la paroi latérale 3 du pot 1 selon l'invention est cependant différente de la forme de la surface extérieure 5 de la paroi latérale 3 du pot 1 des figures 1A à 1D.

Plus précisément, la surface extérieure 5 de la paroi latérale 3 du pot 1 selon l'invention présente une forme de contre-dépouille non-symétrique de révolution autour de la direction verticale Z. La surface extérieure 5 présente ainsi au moins un plan vertical de démoulage P, illustré sur la figure 2A et 2D, tel qu'une valeur de contre-dépouille du pot 1 à des extrémités latérales respectives du pot, d'écartement latéral maximal de la surface extérieure 5 par rapport au plan vertical de démoulage P, est inférieur à une valeur de contre-dépouille maximale du pot 1 sur la circonférence de la surface extérieure 5 du pot 1.

Par « une valeur de contre-dépouille », on entend, de manière générale, une différence entre un encombrement du pot au niveau du col du pot et un encombrement du pot au niveau du ventre du pot.

Par « non-symétrique de révolution autour de la direction verticale Z », on entend notamment que la forme de contre-dépouille de la surface extérieure 5 de la paroi latérale 3 varie autour de la direction verticale Z. Le pot 1 ne présente ainsi pas une forme de contre dépouille qui est constante autour de la direction verticale Z.

Cette forme particulière de la surface extérieure 5 du pot 1 permet de simplifier le démoulage du pot et réduire la distance d'ouverture du moule ouvrant O, tout en conservant une contre-dépouille importante offrant les avantages attendus d'un pot en contre-dépouille, notamment du point de vue de l'aspect extérieur dudit pot.

Ceci va maintenant être expliqué plus en détail en référence aux figures 2A-2D et 3A-3D. Comme illustré sur la figure 2A, le plan vertical de démoulage P est défini par la direction verticale Z et une direction de démoulage D du plan horizontal H.

Un écartement latéral E(t, z) de la surface extérieure 5 par rapport au plan de démoulage P peut alors être défini comme $E(t,z) = R(t,z)\sin(\theta(t,z))$ où

- z est une distance à la paroi de fond 2, par exemple à la surface extérieure de la paroi de fond, d'un point de la surface extérieure 5 de la paroi latérale, selon la direction verticale (Z), et
- $t \in [0,2]$ est une position circonférentielle d'un point de la surface extérieure 5 telle que

  $t = 0$ à une intersection entre la surface extérieure 5 et la direction de démoulage D,

  $t = 1$ à une intersection entre la surface extérieure 5 et la direction opposée à la direction de démoulage D, et

  t varie de 0 à 2 en parcourant une circonférence complète de la surface extérieure 5 autour de la direction verticale Z.

On peut également définir des coordonnées cylindriques $(\theta(t,z), R(t,z), z)$ des points de surface extérieure 5 dans du repère formé par la direction verticale Z et la direction de démoulage D où

  $\theta(t,z)$ est un angle orienté dans le plan horizontal H par rapport à la direction de démoulage D d'un point de la surface extérieure à la position t et la hauteur z, et

  $R(t,z)$ est une distance à la direction verticale Z, dans le plan horizontal H, d'un point de la surface extérieure à la position t et la hauteur z.

L'écartement latéral E(t, z) en fonction de t pour une hauteur z fixée est illustré sur la figure 6B. L'écartement latéral est plus précisément tel que pour toute hauteur z fixée, E(t, z) est :

  convexe pour t variant de 0 à 1, avec une valeur maximale d'écartement latéral $DM1(t1,z) = \max_{t \in [0,1]} E(t, z)$ à une position t1(z) de première section d'ouverture de moule, et

  concave pour t variant de 1 à 2, avec une valeur maximal d'écartement latéral $DM2(t2,z) = \max_{t \in [1,2]}(-E(t,z))$ à une position t2(z) de deuxième section d'ouverture de moule.

De cette manière, il est possible de démouler le pot avec un moule ouvrant 100 tel qu'illustré sur les figures 3A-3D comportant un premier sous-moule 110 et un second sous-moule 120 déplacés selon la direction de démoulage (D) entre la position fermée et la position ouverte et tels que, lorsque le premier sous-moule 110 et le second sous-moule 120 sont en contacts mutuels, les premières surfaces d'ouverture respectives 151, 152 des sous-moules sont en contact avec la surface extérieure 5 du pot à l'endroit des positions t1(z) de première section d'ouverture de moule pour tout hauteur z, et les deuxièmes surfaces d'ouverture respectives 161, 162 des sous-moules sont en contact avec la surface extérieure 5 du pot à l'endroit des positions t2(z) de deuxième section d'ouverture de moule pour tout hauteur z.

Dans un mode de réalisation particulier de l'invention, la première section d'ouverture de moule et la deuxième section d'ouverture de moule peuvent être sensiblement opposées par rapport à l'axe longitudinal Z.

La première section d'ouverture de moule et la deuxième section d'ouverture de moule peuvent par ailleurs être disposées à angle droit par rapport à la direction de démoulage D selon la direction verticale Z, c'est-à-dire que θ(t1(z),z) = $\pi$/2 et θ(t2(z),z) = -$\pi$/2.

De façon avantageuse, le moule ouvrant 100 comprend uniquement deux sous-moules 110, 120 configurés pour être déplacés l'un par rapport à l'autre.

En particulier, le premier sous-moule 110 et le second sous-moule 120 ne sont pas disposés sur une partie fixe du moule ouvrant 100.

On définit également sur la surface extérieure de la paroi latérale:

- une hauteur $z1 = argmax_z(DM1(t1(z),z))$ d'écartement maximal de première contre-dépouille à l'endroit de la première section d'ouverture de moule,
- une hauteur $z1' = argmin_{z>z1}(DM1(t1(z),z))$ d'écartement minimal de première contre-dépouille à l'endroit de la première section d'ouverture de moule,
- une hauteur $z2 = argmax_z(DM2(t2(z),z))$ d'écartement maximal de deuxième contre-dépouille à l'endroit de la deuxième section d'ouverture de moule,
- une hauteur $z2' = argmin_{z>z2}(DM2(t2(z),z))$ d'écartement minimal de deuxième contre-dépouille à l'endroit de la deuxième section d'ouverture de moule.

Par « $zi = argmax_z(f(z))$ » pour une fonction f(z), on entend la valeur zi de z pour laquelle f(z) atteint sa plus grande valeur. Si la fonction f(z) atteint son maximum pour un ensemble de plusieurs valeurs {zj, zk, zl} de z on considérera alors que zi est la plus grande valeur dudit ensemble, soit $zi = max(argmax_z(f(z)))$. Par commodité d'écriture, on note simplement $zi = argmax_z(f(z))$ dans la présente description.

De façon similaire, par « $zi = argmin_{z>zj}(f(z))$ » pour une fonction f(z), on entend la valeur zi de z pour laquelle f(z) atteint sa plus petite valeur au-dessus de zj. Ici également, si la fonction f(z) atteint son minimum pour un ensemble de plusieurs valeurs {zj, zk, zl} de z on considérera alors que zi est la plus grande valeur dudit ensemble, soit $zi = max(argmin_{z>zj}(f(z)))$. Par commodité d'écriture, on note simplement $zi = argmin_{z>zj}(f(z))$ dans la présente description.

Les hauteurs z1 et z2 correspondent ainsi à la hauteur du « ventre » du pot 1, respectivement au niveau de la première section d'ouverture de moule et de la deuxième section d'ouverture de moule.

Les hauteurs z1' et z2' correspondent quant à elles à la hauteur du « col » du pot 1, respectivement au niveau de la première section d'ouverture de moule et de la deuxième section d'ouverture de moule.

Comme on peut le comprendre en examinant les figure 2A et 3D notamment, la forme de la surface extérieure 5 du pot 1 aux hauteurs z1 et z1' fixe une première contrainte sur la distance d'ouverture O entre le premier et le second sous-moule d'un moule ouvrant à l'endroit de la première section d'ouverture de moule. De même, la forme de la surface extérieure 5 du pot 1 aux hauteurs z2 et z2' fixe une deuxième contrainte sur la distance d'ouverture O entre le premier et le second sous-moule d'un moule ouvrant à l'endroit de la deuxième section d'ouverture de moule.

La figure 7A-7B illustre comment un pot ayant une paroi latérale selon l'invention permet de relâcher lesdites contraintes pour réduire la distance d'ouverture O entre le premier et le second sous-moule.

Ainsi, le pot selon l'invention peut être tel qu'un débord de première contre-dépouille à l'endroit de la première section d'ouverture de moule D1(t1) = R(t1(z1),z1) - R(t1(z1'),z1') est inférieur à un débord maximal de première contre-dépouille $D1_{max} = max_t(R(t,z1)) - min_t(R(t,z1'))$ sur la circonférence de la surface extérieure du pot.

De manière similaire, un débord de deuxième contre-dépouille à l'endroit de la deuxième section d'ouverture de moule D2(t2) = R(t2(z2),z2) - R(t2(z2'),z2') peut être inférieur à un débord maximal de deuxième contre-dépouille $D2_{max} = max_t(R(t,z2)) - min_t(R(t,z2'))$ sur la circonférence de la surface extérieure du pot.

En particulier, la distance de première contre-dépouille à l'endroit de la première section d'ouverture de moule $D$1(t1) peut être inférieure à un quart de l'écartement maximal de première contre-dépouille à l'endroit de la première section d'ouverture de moule DM1(t1,z1). De même la distance de deuxième contre-dépouille à l'endroit de la deuxième section d'ouverture de moule D2(t2) peut également être inférieure à un quart de l'écartement maximal de deuxième contre-dépouille à l'endroit de la deuxième section d'ouverture de moule DM2(t2, z2).

Dans un mode particulier, lesdites distances de première contre-dépouille à l'endroit de la première section d'ouverture de moule $D$1(t1) et distance de deuxième contre-dépouille à l'endroit de la deuxième section d'ouverture de moule $D$2(t2) peuvent être respectivement inférieures à un dixième de l'écartement maximal de première contre-dépouille à l'endroit de la première section d'ouverture de moule DM1(t1,z1) et à un quart de l'écartement maximal de deuxième contre-dépouille à l'endroit de la deuxième section d'ouverture de moule DM2(t2,z2).

On peut notamment voir cela sur la figure 7B qui est une courbe représentant le débord de première contre-dépouille de la surface extérieure d'un pot selon un mode de réalisation de l'invention ou de la surface intérieur d'une cavité d'un moule ouvrant selon un mode de réalisation de l'invention, en fonction de la position t sur une moitié de la circonférence de la surface extérieure du pot ou de la surface intérieure de la cavité du moule ouvrant.

La courbe en pointillé de la figure 7B représente en particulier le débord de première contre-dépouille de la surface extérieure d'un pot selon l'art antérieur des figures 1A-1D ou de la surface intérieur d'une cavité d'un moule ouvrant selon l'art antérieur des figures 1A-1D.

Grâce cette géométrie, on réduit ainsi encore la distance d'ouverture O entre le premier et le second sous-moule d'un moule ouvrant formant le pot 1.

Une manière alternative de relâcher lesdites contraintes sur la distance d'ouverture O entre le premier et le second sous-moule est illustrée sur la figure 8A-8B.

On considère ici plus précisément l'écartement longitudinal de la surface extérieure 5 de la paroi latérale 3 du pot 1 selon la direction de démoulage D, qui est donné par $F(t,z) = R(t,z)\cos(\theta(t,z))$.

Dans ce mode de réalisation de l'invention, la surface extérieure 5 de la paroi latérale 2 du pot est contrainte sur la première moitié de pot ainsi que sur la deuxième moitié de pot, correspondant respectivement aux portion du pot accueillies par un premier sous-moule et un deuxième sous-moule d'un moule ouvrant formant le pot, et notamment contrainte au niveau des première et deuxième sections d'ouverture de moule.

Ainsi, une distance longitudinale de première contre-dépouille sur une première moitié de pot $D1_{long}(t)$ = $F(c1(t),z1) - F(t,z1')$ pour $t \in [0, t1(z1')]$ présente un minimum local à l'endroit de la première section d'ouverture de moule $t = t1(z1')$, où $c1(t)$ est une conversion longitudinale de position de première contre-dépouille sur une première moitié de pot telle que $\sin(\theta(c1(t),z1))R(c1(t),z1) = \sin(\theta(t,z1'))R(t,z1')$ pour $t \in [0,t1(z1')]$.

Du fait de la forme convexe de l'écartement latéral $E(t, z)$ pour $t$ variant de 0 à $t1(z)$ et pour toute hauteur $z$ fixée, la conversion longitudinale de position de première contre-dépouille est bien définie pour tout $t \in [0,t1(z1')]$.

De même, une distance longitudinale de première contre-dépouille sur une deuxième moitié de pot $D1_{long}(t)$ = $F(c2(t),z1) - F(t, z1')$ pour $t \in [t1(z1'),1]$ présente un minimum local à l'endroit de la première section d'ouverture de moule $t = t1(z1')$ où $c2(t)$ est une conversion longitudinale de position de première contre-dépouille sur une deuxième moitié de pot telle que $\sin(\theta(c2(t),z1))R(c2(t),z1) = \sin(\theta(t,z1'))R(t,z1')$ pour $t \in [t1(z1'),1]$.

Ici également, du fait de la forme convexe de l'écartement latéral $E(t, z)$ pour $t$ variant de $t1(z)$ à 1 et pour toute hauteur $z$ fixée, la conversion longitudinale de position de première contre-dépouille est bien définie pour tout $t \in [t1(z1'), 1]$.

Une distance longitudinale de deuxième contre-dépouille sur une deuxième moitié de pot $D2_{long}(t)$ = $F(c3(t),z2) - F(t,z2')$ pour $t \in [1,t2(z2')]$ présente un minimum local à l'endroit de la deuxième section d'ouverture de moule $t = t2(z2')$ où $c4(t)$ est une conversion longitudinale de position de deuxième contre-dépouille sur une deuxième moitié de pot telle que $\sin(\theta(c3(t),z2))$ $R(c4(t),z2) = \sin(\theta(t,z2'))R(t,z2')$ pour $t \in [1,t2(z2')]$.

Du fait de la forme concave de l'écartement latéral $E(t, z)$ pour $t$ variant de à 1 $t2(z)$ et pour toute hauteur $z$ fixée, la conversion longitudinale de position de deuxième contre-dépouille est bien définie pour tout $t \in [1,t2(z2')]$.

Enfin, une distance longitudinale de deuxième contre-dépouille sur une première moitié de pot $D2_{long}(t)$ = $F(c4(t),z2) - F(t,z2')$ pour $t \in [t2(z2'),2]$ présente également un minimum local à l'endroit de la deuxième section d'ouverture de moule $t = t2(z2')$ où $c4(t)$ est une conversion longitudinale de position de deuxième contre-dépouille sur une première moitié de pot telle que $\sin(\theta(c3(t),z2))R(c3(t),z2) = \sin(\theta(t,z2'))R(t,z2')$ pour $t \in [t2(z2'),2]$.

Ici également, du fait de la forme concave de l'écartement latéral $E(t, z)$ pour $t$ variant de $t2(z)$ à 2 et pour toute hauteur $z$ fixée, la conversion longitudinale de position de deuxième contre-dépouille est bien définie pour tout $t \in [t2(z'),2]$.

La figure 8B illustre la distance longitudinale de première contre-dépouille en fonction de la position $t$ sur une première moitié de d'un pot selon un mode de réalisation de l'invention ou d'une cavité d'un moule ouvrant selon un mode de réalisation de l'invention. La courbe en pointillé de la figure 8B représente la distance longitudinale de première contre-dépouille d'un pot selon l'art antérieur des figures 1A-1D ou de la surface intérieur d'une cavité d'un moule ouvrant selon l'art antérieur des figures 1A-1D.

Comme on peut le voir sur la figure 3D, une telle forme de la surface extérieure 5 de la paroi latérale 2 du pot permet de réduire la distance d'ouverture O entre le premier et le second sous-moule.

Encore une autre manière de relâcher lesdites contraintes sur la distance d'ouverture O entre le premier et le second sous-moule est illustrée sur la figure 9A-9B.

On considère cette fois à nouveau l'écartement latéral de la surface extérieure 5 de la paroi latérale 3 du pot 1 selon la direction de démoulage D, qui est donné par $E(t,z) = R(t,z)\sin(\theta(t,z))$.

Dans ce mode de réalisation de l'invention, la surface extérieure 5 de la paroi latérale 2 du pot est contrainte au niveau des première et deuxième sections d'ouverture de moule de la manière suivante.

Une distance latérale de première contre-dépouille $D1_{lat}(t)$ = $E(d1(t),z1) - E(t,z1')$ présente un minimum local à l'endroit de la première section d'ouverture de moule $t = t1(z1')$ où $d1(t)$ est une conversion latérale de position de première contre-dépouille telle que $d1(t)$ est une plus grande valeur de $[0,1]$ telle que $\theta(d1(t),z1) = \theta(t,z1')$. Contrairement au mode de réalisation précédent défini par la distance longitudinale, il est possible d'obtenir plusieurs valeurs $t'$ telles que $\theta(t',z1) = \theta(t,z1))$, $d1(t)$ est donc la plus grande valeur de l'intervalle $[0,1]$ vérifiant cette égalité.

En outre, une distance latérale de deuxième contre-dépouille $D2_{lat}(t)$ = $E(d1(t),z2) - E(t,z2')$ présente un minimum local à l'endroit de la deuxième section d'ouverture de moule $t = t2(z2')$ ou $d2(t)$ est une conversion latérale de position de deuxième contre-dépouille telle que $d2(t)$ est une plus grande valeur de $[1,2]$ telle que $\theta(d2(t),z2) = \theta(t,z2')$. Ici également, il est possible d'obtenir plusieurs valeurs $t'$ telles que $\theta(t',z2) = \theta(t,z2'))$, $d2(t)$ est ainsi la plus grande valeur de l'intervalle $[1,2]$ vérifiant cette égalité.

Ceci est représenté notamment sur la figure 9B qui est une courbe de la distance latérale de première contre-dépouille d'un pot selon un mode de réalisation de l'invention ou d'une cavité d'un moule ouvrant selon un mode de réalisation de l'invention en fonction de la position circonférentielle t. La courbe en pointillé de la figure 9B représente la distance latérale de première contre-dépouille d'un pot selon l'art antérieur des figures 1A-1D ou de la surface intérieur d'une cavité d'un moule ouvrant selon l'art antérieur des figures 1A-1D.

Les modes de réalisation des pots décrits ci-dessus permettent notamment de réduire la distance d'ouverture entre les sous-moules d'un moule ouvrant utilisé pour former ledit pot.

Ainsi, dans certain de ces modes de réalisation au moins, il est possible de former le pot avec un moule ouvrant tel que, dans la position ouverte, le premier sous-moule et le second sous-moule soient distants l'un de l'autre, selon la direction de démoulage D d'une distance d'ouverture O comprise entre une et trois fois un écartement total de contre-dépouille.

Par écartement total de contre-dépouille, on entend une somme entre une distance maximale de contre-dépouille de la paroi latérale selon la direction de démoulage D et une distance maximale de contre-dépouille de la paroi latérale selon la direction opposée la direction de démoulage D.

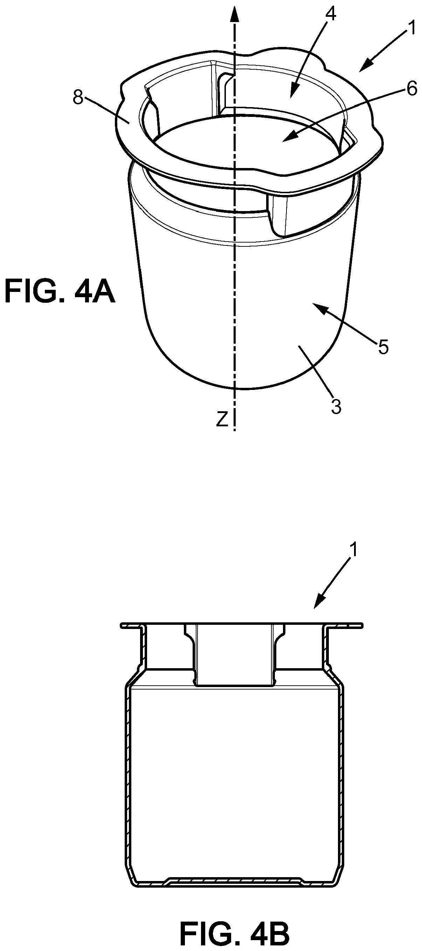

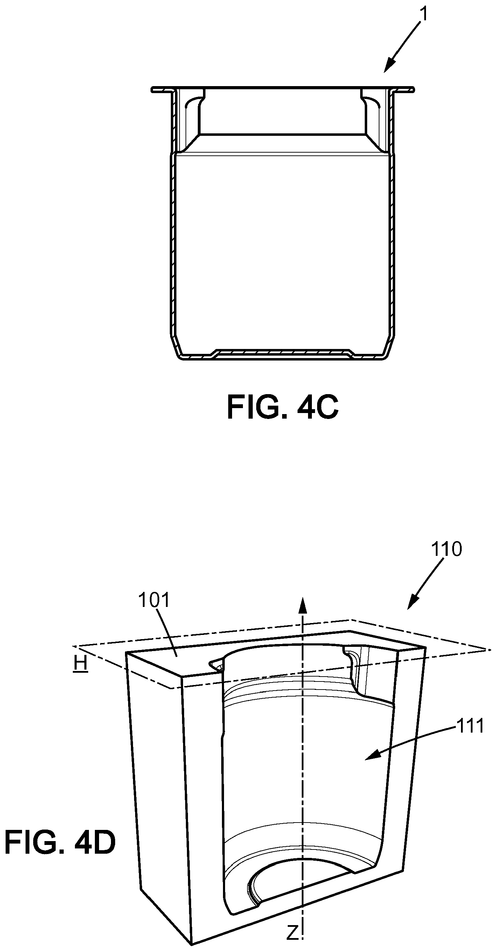

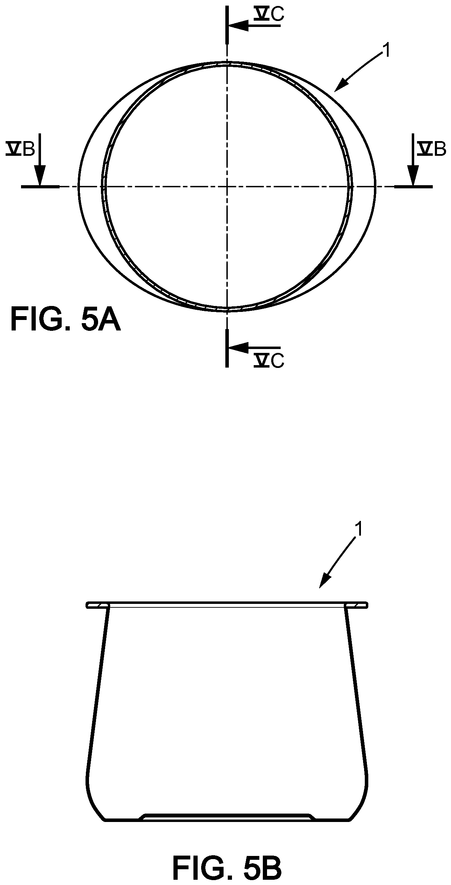

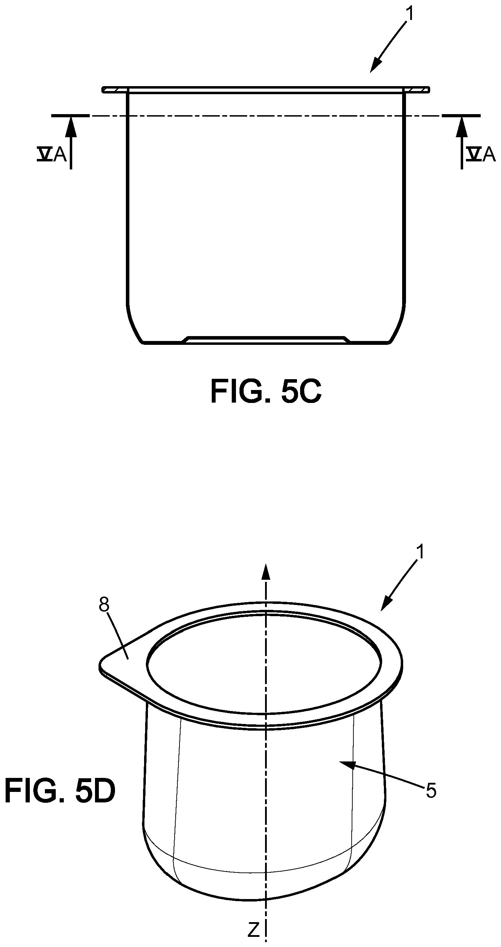

Les figures 4A-4C illustrent une première variante du pot des figures 2A-2D. La figure 4D illustre un sous-moule d'un moule ouvrant permettant de mettre en forme le pot des figures 4A-4C. Les figures 5A-5D illustrent une deuxième variante du pot des figures 2A-2D. Les variantes des figures 4A-4C et 5A-5D sont données à titre indicatif, d'autres variantes sont bien évidemment envisageables.

L'invention a également pour objet un moule ouvrant 100 spécialement destiné à être utilisé dans une machine de formage pour mettre en forme au moins un pot tel que décrit ci-dessus.

Le moule ouvrant 100 comporte un premier et un deuxième sous-moules 110, 120 comme décrit ci-avant tels que, dans la position fermée du moule ouvrant 100, le premier sous-moule 110 et le second sous-moule 120 forment ensemble au moins une cavité intérieure 130 définie par une surface intérieure de cavité 131 et ouverte à l'endroit d'une surface supérieure 101 du moule ouvrant 100, par une ouverture supérieure 140 s'étendant selon un plan horizontal H. La direction de démoulage D du moule et la direction verticale de la cavité sont définies et orientées comme indiqué ci-dessus et illustrées par exemple sur la figure 4C.

Avantageusement, les premier et deuxième sous-moules 110, 120 forment seuls la cavité intérieure 130 dans la position fermée.

Le moule ouvrant selon l'invention est en particulier tel que la surface intérieure de cavité 131 du moule ouvrant dans la position fermée présente une forme de contre-dépouille non-symétrique de révolution autour de la direction verticale Z du moule ouvrant.

Plus précisément, la surface intérieure présente un plan vertical de démoulage P comprenant la direction verticale Z du moule ainsi que la direction de démoulage du moule D et est telle qu'une valeur de contre-dépouille du moule ouvrant à des extrémités latérales respectives de la cavité intérieure du moule, d'écartement latéral maximal de la surface intérieure par rapport au plan vertical de démoulage P, est inférieure à une valeur de contre-dépouille maximale du moule ouvrant sur la circonférence de la surface intérieure de la cavité intérieure du moule ouvrant.

Le moule ouvrant étant spécialement destiné à former le pot 1 qui vient d'être décrit, la surface intérieure 131 de la cavité intérieure 130 présente une forme géométrique similaire à celle qui vient d'être décrite pour la surface extérieure 5 de la paroi latérale 3 du pot 1.

Les éléments détaillés précédemment, relatifs à la surface extérieure de la paroi latérale du pot sont donc également applicables au moule, en remplaçant la « surface extérieure » de la paroi latérale du pot par la « surface intérieure » de la cavité du moule ouvrant dans la position fermée.

Référence est donc faite aux caractéristiques géométriques détaillées ci-dessus qui ne seront pas répétés ici.

On note par ailleurs, concernant la forme de la surface intérieure du moule ouvrant dans la position fermée, que la première section d'ouverture de moule correspond dans le cas du moule à un endroit de contact entre des premières surfaces d'ouverture 151, 152 respectives du premier sous-moule et du deuxième sous-moule.

De même, la deuxième section d'ouverture de moule correspond, dans le cas du moule, à un endroit de contact entre des deuxièmes surfaces d'ouverture 161, 162 respectives du premier sous-moule et du deuxième sous-moule.

En outre, la première moitié de pot et la deuxième moitié de pot, dans le cas de la surface extérieure, correspondent respectivement, dans le cas du moule, à une première moitié de la cavité intérieure et à une deuxième moitié de la cavité intérieure.

De cette manière, le moule ouvrant est tel que, dans la position ouverte, le premier sous-moule et le second sous-moule soient distants l'un de l'autre, selon la direction de démoulage D d'une distance d'ouverture O comprise entre une et trois fois un écartement total de contre-dépouille.

Par écartement total de contre-dépouille, on entend une somme entre une distance maximale de contre-dépouille de la paroi latérale selon la direction de démoulage D et une distance maximale de contre-dépouille de la paroi latérale selon la direction opposée la direction de démoulage D.

Le moule ouvrant 100 est destiné à être utilisé dans une machine de formage 200 pour mettre en forme un ou plusieurs pot(s) 1 tel(s) que décrits(s) ci-avant.

Ainsi, les premier et second sous-moules 110, 120 peuvent notamment former, dans la position fermée du moule 100, une pluralité de n cavités intérieures 130a, 130b, ... 130n, alignées selon une direction longitudinale X. La direction longitudinale X peut notamment être perpendiculaire à la direction de démoulage D des moules ouvrants.

De cette manière, il est possible de fabriquer en une seule opération une rangée complète de pots 1 avec un unique moule ouvrant 100.

Plusieurs telles rangées de pots 1 peuvent être fabriquées par une machine de formage 200 telle qu'elle va maintenant être décrite.

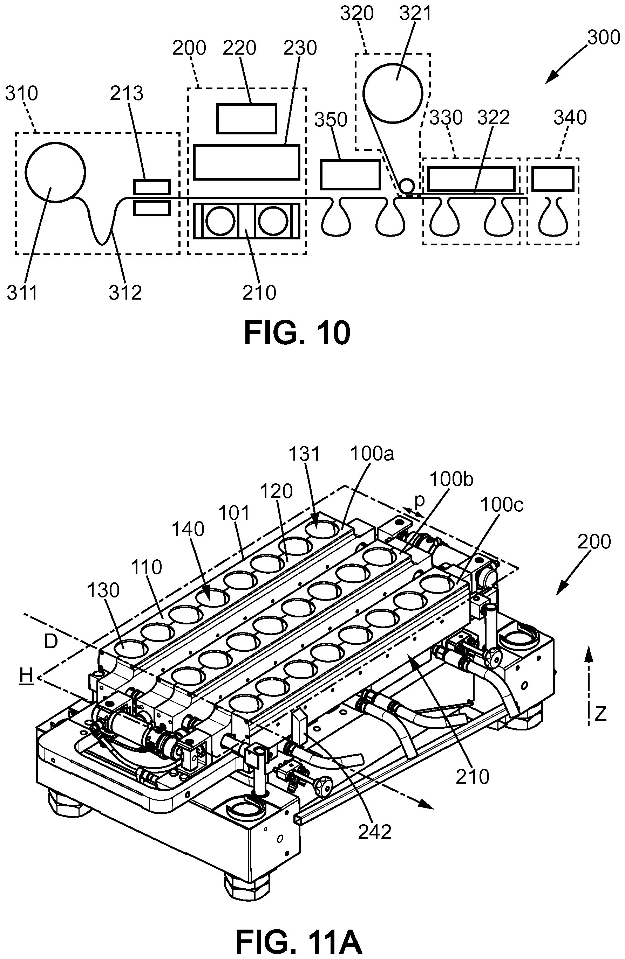

Une machine de formage 200 selon l'invention est par exemple illustrée figure 10. Comme indiqué ci-avant, une telle machine de formage 200 comporte au moins un moule ouvrant 100.

Avantageusement, cette machine de formage 200 comporte une pluralité de moules ouvrants 100a, 100b, ..., 100m.

L'ouverture et la fermeture des m moules ouvrants 100 est commandée de manière synchrone par un dispositif de commande de formage 220. La machine de formage de moule 200 comporte par ailleurs des contre-moules et poinçons 230 pour mettre en forme les pots 1 dans les moules ouvrants 100, lesdits contre-moules et poinçons 230 étant avantageusement également commandés de manière synchrone avec l'ouverture et la fermeture des m moules ouvrants 100 par le dispositif de commande de formage 220.

Une telle synchronisation peut être réalisée de manière mécanique, par des bielles ou des cames reliant les moules ouvrants 100 aux contre-moules et poinçons 230, ou peut être réalisée de manière électronique par des moteurs de commande distincts des moules ouvrants 100 et des contre-moules et poinçons 230 ainsi que des capteurs et une électronique de synchronisation.

Il est ainsi possible, en une étape de formage, de mettre en forme n*m pots à l'aide des n*m cavités intérieures des moules ouvrants 100.

Les moules ouvrants 100a, 100b, ..., 100m sont avantageusement disposés de sorte à ce que leurs direction de démoulage D soient parallèles entre elles et définissent ainsi une direction longitudinale X de la machine de formage 200, perpendiculaire audites direction de démoulage D. Les moules ouvrants 100a, 100b, ..., 100m sont arrangés pour former au moins deux rangées de moules 210 s'étendant chacune selon la direction longitudinale X de la machine de formage. Chaque rangée de moules 210 comporte un ou plusieurs moules ouvrants 100 juxtaposés et alignés dans la direction longitudinale X.

Comme cela est visible sur la figure 11A, les rangées de moules 210 sont arrangées avec une période spatiale p selon la direction de démoulage D. La période spatiale p est en particulier inférieure à une fois et demi une dimension maximale de la cavité intérieure 130 d'un moule ouvrant selon la direction de démoulage D.

En effet, du fait de la distance d'ouverture O limitée des moules ouvrants 100, il est possible de positionner les rangées de moules 210 avec une distance relative selon la direction de démoulage D, c'est-à-dire une période spatiale p, réduite par rapport à l'art antérieur.

De cette manière, il est possible d'utiliser une feuille de matériau de formage unique et continue, recouvrant l'ensemble des n*m cavités intérieures des moules ouvrants 100, pour former n*m pots en une étape de formage.

On évite ainsi l'utilisation de dispositifs annexes de prédécoupe de la feuille de matériaux de formage.

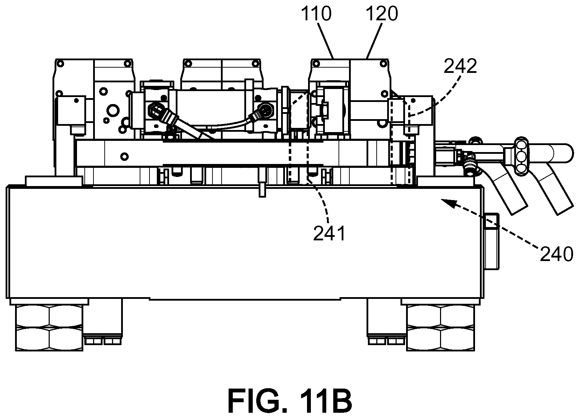

Comme cela est illustré sur la figure 11B, la machine de formage 200 peut également comporter au moins un dispositif de blocage 240 d'écartement des moules ouvrant mis sous pression, en particulier un dispositif de blocage 240 pour chaque moule ouvrant 100. Ledit au moins dispositif de blocage 240 d'écartement des moules ouvrants peut notamment être commandé par le dispositif de commande des moules 220.

Le dispositif de blocage 240 d'écartement peut par exemple comporter une première came 241 et une deuxième came 242, venant respectivement en contact avec le premier sous-moule 110 et le second sous-moule 120 lorsque le moule ouvrant est dans la position fermée.

La première came 241 et la deuxième came 242 sont adaptées pour, lorsqu'elles sont en contact avec lesdits sous-moules 110, 120, empêcher un mouvement relatif desdits sous-moules 110, 120 selon la direction de démoulage D.

Comme on peut le voir sur la figure 11B, les première et deuxième cames 241, 242 viennent en contact avec les sous-moules 110, 120 par un côté opposé à la surface supérieure 101 du moule ouvrant 100 selon la direction verticale Z de sorte à ne pas dépasser de ladite surface supérieure 101 dudit moule 100 selon la direction verticale Z.

La machine de formage 200 décrite ci-avant peut par ailleurs être intégrée dans une ligne de fabrication de pots par formage 300 selon l'invention, par exemple telle qu'illustrée sur la figure 10.

Une telle ligne de fabrication comporte une machine de formage 200 ainsi que des moyens d'amenée 310 d'une feuille de matériau de formage à partir d'au moins une bobine d'alimentation 311.

Les moyens d'amenée 310 de la feuille de matériau de formage sont adaptés pour amener une portion de feuille de matériau 312 en contact avec la face supérieure 101 des moules ouvrants 100 de sorte à ce que la portion de feuille de matériau 312 soit reliée de manière continue à la bobine d'alimentation 311.

Ainsi en particulier, les moyens d'amenée 310 de la feuille de matériau de formage jusqu'aux moules ouvrants 100 de la machine de formage 200 ne découpent pas ladite feuille de matériau de formage.

Par ailleurs, comme illustré sur la figure 10, la portion de feuille de matériau 312 amenée en contact avec la face supérieure 101 des moules ouvrants 100 couvre au moins au moins deux rangées 210 de moules ouvrant 100 de la machine de formage 200.

Comme indiqué ci-avant, du fait de la distance d'ouverture O limitée des moules ouvrants 100, les rangées de moules 210 sont proches les unes des autres selon la direction de démoulage D et il est possible d'utiliser une feuille de matériau de formage unique et continue, pour former n*m pots en une étape de formage sans faire appel à des dispositifs annexes de prédécoupe de la feuille de matériaux de formage.

Un dispositif de chauffe 213 peut être placé en amont de la machine de formage 200 pour préchauffer la feuille de matériau de formage pour l'opération de formage.

La ligne de fabrication de pots 300 peut également comporter des moyens d'amenée 320 d'une feuille d'opercule à partir d'au moins une bobine d'alimentation 321 de feuille d'opercule.

De manière similaire à ce qui a été décrit concernant la feuille de matériau de formage, les moyens d'amenée 320 de feuille d'opercule sont adaptés pour amener une portion de feuille d'opercule 322 en regard des ouvertures 3 de pots1 mis en forme par la machine de formage de pots de la ligne de fabrication.

La ligne de fabrication comporte alors avantageusement un dispositif de scellage de pots 330 adaptée pour venir mettre en contact et sceller ladite portion de feuille d'opercule 322 avec la collerette 6 des pots 1.

Comme cela est visible sur la figure 10, la portion de feuille d'opercule 322 est amenée en regard des ouvertures 6 de pots en étant reliée de manière continue à la bobine d'alimentation 321 de feuille d'opercule. En particulier, la portion de feuille d'opercule 322 peut couvrir les ouvertures 6 respective d'une pluralité de n*m pots formés en une opération de formage par les cavités de moules ouvrants disposés en m rangées comme indiqué ci-avant. Les n*m pots peuvent avoir, le cas échéant, leurs collerettes 8 reliées entre elles par des portions résiduelles de la portion de feuille de matériaux 312.

Enfin la ligne de fabrication peut comporter, comme cela est connu par ailleurs, un dispositif de dosage de contenu 350 ainsi qu'un dispositif de découpe de pots 340, illustrés sur la figure 10.

## Revendications

**1.** Moule ouvrant (100) spécialement destiné à être utilisé dans une machine de formage (200) pour mettre en forme au moins un pot à contre-dépouille (1) comportant une paroi de fond (2) ainsi qu'une paroi latérale (3) fermée sur elle-même et reliée à la paroi de fond (2), la paroi latérale et la paroi de fond comportant une surface intérieure (4) définissant un intérieur de pot ainsi qu'une surface extérieure (5) opposée à la surface intérieure,

le pot comprenant en outre une ouverture (6) donnant accès à l'intérieur de pot, ladite ouverture (6) étant apte à être recouverte par une fermeture de dessus (7) pour isoler l'intérieur du pot, l'ouverture s'étendant selon un plan horizontal (H) et définissant une direction verticale (Z), perpendiculaire au plan horizontal (H), passant par un barycentre de l'ouverture, et orientée depuis la paroi de fond vers l'ouverture,

la surface extérieure (5) de la paroi latérale (3) du pot présentant une forme de contre-dépouille non-symétrique de révolution autour de la direction verticale (Z),

ladite surface extérieure (5) présentant au moins un plan vertical de démoulage (P) tel qu'une valeur de contre-dépouille du pot à des extrémités latérales respectives du pot, d'écartement latéral maximal de la surface extérieure par rapport au plan vertical de démoulage (P), est inférieure à une valeur de contre-dépouille maximale du pot (1) sur la circonférence de la surface extérieure (5) du pot,

le moule ouvrant (100) comportant un premier sous-moule (110) et un second sous-moule (120), lesdits sous-moules étant adaptés pour être déplacés selon une direction de démoulage (D) entre une position fermée dans laquelle le premier sous-moule et le second sous-moule sont en contacts mutuels et une position ouverte dans laquelle lesdits sous-moules sont distants l'un de l'autre,

lesdits premier sous-moule et second sous-moule formant au moins une cavité intérieure (130) dans la position fermée du moule, ladite au moins une cavité étant définie par une surface intérieure de cavité (131) comprenant une surface intérieure du premier sous-moule (111) et une surface intérieure du second sous-moule (121), la cavité étant ouverte à l'endroit d'une surface supérieure (101) du moule ouvrant, par une ouverture supérieure (140) s'étendant selon un plan horizontal (H) comprenant la direction de démoulage (D), l'ouverture supérieure définissant une direction verticale de la cavité (Z), perpendiculaire au plan horizontal (H), passant par un barycentre de ladite ouverture supérieure, et orientée depuis un fond de cavité vers l'ouverture supérieure,

le moule ouvrant étant **caractérisé en ce que** la surface intérieure de cavité (131) dans la position fermée présente une forme de contre-dépouille non-symétrique de révolution autour de la direction verticale (Z),

ladite surface intérieure présentant un plan vertical de démoulage (P) comprenant la direction verticale (Z) ainsi que la direction de démoulage (D) et étant telle qu'une valeur de contre-dépouille du moule à des extrémités latérales respectives de la cavité intérieure du moule, d'écartement latéral maximal de la surface intérieure par rapport au plan vertical de démoulage (P), est inférieure à une valeur de contre-dépouille maximale du moule sur la circonférence de la surface intérieure de la cavité intérieure.

2. Moule ouvrant selon la revendication 1, dans lequel le plan vertical de démoulage (P) est tel qu'un écartement latéral $E(t, z) = R(t, z)\sin(\theta(t, z))$ de la surface intérieure de cavité (131) du moule ouvrant dans la position fermée par rapport à la direction de démoulage (D), est une fonction

convexe pour t variant de 0 à 1, avec une valeur maximale d'écartement latéral $DM1(t1, z) = max_{t \in [0,1]} E(t, z)$ à une position t1(z) de première section d'ouverture de moule correspondant à un endroit de contact entre des premières surfaces d'ouverture respectives du premier sous-moule et du deuxième sous-moule, et

concave pour t variant de 1 à 2, avec une valeur maximal d'écartement latéral $DM2(t2, z) = max_{t \in [1,2]}(-E(t, z))$ à une position t2(z) de deuxième section d'ouverture de moule correspondant à un endroit de contact entre des deuxième surfaces d'ouverture respectives du premier sous-moule et du deuxième sous-moule, où

z est une distance au fond de cavité d'un point de la surface intérieure de la cavité, selon la direction verticale (Z),

$t \in [0,2]$ est une position circonférentielle d'un point de la surface intérieure telle que $t = 0$ à une intersection entre la surface intérieure et la direction de démoulage (D), $t = 1$ à une intersection entre la surface intérieure et la direction opposée à la direction de démoulage (D) et t varie de 0 à 2 en parcourant une circonférence complète de la surface intérieure autour de la direction verticale (Z),

$\theta(t, z)$ est un angle orienté dans le plan horizontal (H) par rapport à la direction de démoulage (D) d'un point de la surface intérieure à la position t et la hauteur z, et

R(t, z) est une distance à la direction verticale (Z), dans le plan horizontal (H), d'un point de la surface intérieure à la position t et la hauteur z,

et la surface intérieure de la cavité présente :

- une hauteur $z1 = argmax_z(DM1(t1(z),z))$ d'écartement maximal de première contre-dépouille à l'endroit de la première section d'ouverture de moule,
- une hauteur $z1' = argmin_{z>z1}(DM1(t1(z),z))$ d'écartement minimal de première contre-dépouille à l'endroit de la première section d'ouverture de moule,
- une hauteur $z2 = argmax_z(DM2(t2(z),z))$ d'écartement maximal de deuxième contre-dépouille à l'endroit de la deuxième section d'ouverture de moule,
- une hauteur $z2' = argmin_{z>z2}(DM2(t2(z),z))$ d'écartement minimal de deuxième contre-dépouille à l'endroit de la deuxième section d'ouverture de moule.

3. Moule ouvrant selon la revendication 2, dans lequel

- un débord de première contre-dépouille à l'endroit de la première section d'ouverture de moule $D1(t1) = R(t1(z1),z1) - R(t1(z1'),z1')$ est inférieur à un débord maximal de première contre-dépouille $D1_{max} = max_t(R(t, z1)) - min_t(R(t, z1'))$ sur la circonférence de la surface intérieure de la cavité, et
- un débord de deuxième contre-dépouille à l'endroit de la deuxième section d'ouverture de moule $D2(t2) = R(t2(z1),z2) - R(t2(z2'),z2')$ est inférieur à un débord maximal de deuxième contre-dépouille $D2_{max} = max_t(R(t, z2)) - min_t(R(t, z2'))$ sur la circonférence de la surface intérieure de la cavité.

4. Moule ouvrant selon la revendication 2 ou 3, dans lequel la surface intérieure de la cavité (131) est telle que,

- une distance longitudinale de première contre-dépouille sur une première moitié de cavité $D1_{long}(t) = F(c1(t),z1) - F(t, z1')$ pour $t \in [0,t1(z1')]$ présente un minimum local à l'endroit de la première section d'ouverture de moule $t = t1(z1')$,
- une distance longitudinale de première contre-dépouille sur une deuxième moitié de cavité $D1_{long}(t) = F(c2(t),z1) - F(t, z1')$ pour $t \in [t1(z1'), 1]$ présente un minimum local à l'endroit de la première section d'ouverture de moule $t = t1(z1')$,
- une distance longitudinale de deuxième contre-dépouille sur une deuxième moitié de cavité $D2_{long}(t) = F(c3(t),z2) - F(t, z2')$ pour $t \in [1, t2(z2')]$ présente un minimum local à l'endroit de la deuxième section d'ouverture de moule $t = t2(z2')$,
- une distance longitudinale de deuxième contre-dépouille sur une première moitié de cavité $D2_{long}(t) = F(c4(t), z2) - F(t, z2')$ pour $t \in [t2(z2'),2]$ présente un minimum local à l'endroit de la deuxième section d'ouverture de moule $t = t2(z2')$,

où

$F(t, z) = R(t, z)\cos(\theta(t, z))$ est un écartement longitudinal de la surface intérieure de la cavité selon la direction de démoulage (D),
c1(t) est une conversion longitudinale de position de première contre-dépouille sur une première moitié de cavité telle que $\sin(\theta(c1(t),z1)) R(c1(t),z1) = \sin(\theta(t,z1'))R(t,z1')$ pour $t \in [0, t1(z1')]$,

$c_2(t)$ est une conversion longitudinale de position de première contre-dépouille sur une deuxième moitié de cavité telle que $\sin(\theta(c_2(t),z_1))R(c_2(t),z_1) = \sin(\theta(t,z_1'))R(t,z_1')$ pour $t \in [t_1(z_1'),1]$,

$c_3(t)$ est une conversion longitudinale de position de deuxième contre-dépouille sur une deuxième moitié de cavité telle que $\sin(\theta(c_3(t),z_2))R(c_4(t),z_2) = \sin(\theta(t,z_2'))R(t,z_2')$ pour $t \in [1, t_2(z_2')]$, et

$c_4(t)$ est une conversion longitudinale de position de deuxième contre-dépouille sur une première moitié de cavité telle que $\sin(\theta(c_4(t),z_2))R(c_3(t),z_2) = \sin(\theta(t,z_2'))R(t, z_2')$ pour $t \in [t_2(z_2'), 2]$.

5. Moule ouvrant selon l'une quelconque des revendications 2 à 4, dans lequel

- une distance latérale de première contre-dépouille $D1_{lat}(t) = E(d(t),z_1) - E(t,z_1')$ présente un minimum local à l'endroit de la première section d'ouverture de moule $t = t_1(z_1')$, et
- une distance latérale de deuxième contre-dépouille $D2_{lat}(t) = E(d(t),z_2) - E(t, z_2')$ présente un minimum local à l'endroit de la deuxième section d'ouverture de moule $t = t_2(z_2')$,

où

$d_1(t)$ est une conversion latérale de position de première contre-dépouille telle que $d_1(t) = argmax_t(\theta(t',z_1) = \theta(t,z_1'))$, et
$d_2(t)$ est une conversion latérale de position de deuxième contre-dépouille telle que $d_2(t) = argmax_t(\theta(t',z_2) = \theta(t,z_2'))$.

6. Moule ouvrant selon l'une quelconque des revendications 1 à 5, dans lequel lesdits premier sous-moule (110) et second sous-moules (120) forment, dans la position fermée du moule, une pluralité de cavités intérieures (130) alignées selon une direction longitudinale (X).

7. Moule ouvrant selon l'une quelconque des revendications 1 à 6, dans lequel dans la position ouverte, le premier sous-moule (110) et le second sous-moule (120) sont distant l'un de l'autre, selon la direction de démoulage (D) d'une distance d'ouverture O comprise entre une et trois fois une somme entre une distance maximale de contre-dépouille de la paroi latérale selon la direction de démoulage (D) et une distance maximale de contre-dépouille de la paroi latérale selon la direction opposée la direction de démoulage (D).

8. Machine de formage (200) comportant au moins un moule ouvrant (100) selon l'une quelconque des revendications 1 à 7.

9. Machine de formage selon la revendication 8, comportant une pluralité de moules ouvrants (100) alignés pour former au moins deux rangées de moules (210) s'étendant chacune selon une direction longitudinale (X) perpendiculaire à la direction de démoulage (D) desdits moules ouvrants, chaque rangée de moules (210) comportant un ou plusieurs moules ouvrants juxtaposés dans la direction longitudinale (X), lesdites rangées de moules étant arrangées avec une période spatiale p selon la direction de démoulage (D), dans laquelle ladite période spatiale p est inférieure à une fois et demi une dimension maximale de la cavité intérieure (131) d'un moule ouvrant (100) selon la direction de démoulage (D).

10. Machine de formage selon la revendication 8 ou 9, comportant en outre au moins un dispositif de blocage d'écartement (240) des moules ouvrant mis sous pression, ledit dispositif de blocage d'écartement (240) comportant une première came (241) et une deuxième came (242), lesdites première et deuxième cames venant respectivement en contact avec le premier sous-moule (110) et le second sous-moule (120) d'un moule ouvrant dans la position fermée de sorte à empêcher un mouvement relatif desdits sous-moules selon la direction de démoulage (D), lesdites première et deuxième cames (241, 242) venant en contact avec lesdits premier et deuxième sous-moules par un côté opposé à la surface supérieure (101) dudit moule ouvrant (100) selon la direction verticale (Z) de sorte à ne pas dépasser de la surface supérieure dudit moule ouvrant dans la direction verticale (Z).

11. Ligne de fabrication de pots par formage, comportant une machine de formage (200) selon l'une des revendications 8 à 10 ainsi que des moyens d'amenée d'une feuille de matériau de formage (310) à partir d'au moins une bobine d'alimentation (311), les moyens d'amenée de ladite feuille de matériau de formage étant adaptés pour amener une portion de feuille de matériau (312) en contact avec la face supérieure (101) des moules ouvrants (100), ladite portion de feuille de matériau étant reliée de manière continue à la bobine d'alimentation (311).

12. Ligne de fabrication de pots par formage selon la revendication 11, dans lequel ladite portion de feuille de matériau (312) en contact avec la face supérieure (101) des moules ouvrants (100) couvre au moins au moins deux rangées (210) de moules ouvrant de la machine de formage.

13. Ligne de fabrication de pots par formage selon la revendication 11 ou 12, comportant en outre des moyens d'amenée d'une feuille d'opercule (320) à partir d'au moins une bobine d'alimentation (321), lesdits moyens d'amenée de feuille d'opercule étant adaptés pour amener une portion de feuille d'opercule (322) en regard de l'ouverture (6) de rangées de pots (1) mis en forme par la machine de formage de pots (200), lesdits pots ayant, le cas échéant, leurs collerettes (8) reliées entre elles par la portion de feuille de matériaux, ladite portion de feuille d'opercule étant reliée de manière continue à la bobine d'alimentation,

la ligne comportant en outre un dispositif de scellage de pots (330) adaptée pour venir mettre en contact et sceller ladite portion de feuille d'opercule avec la collerette des pots.

14. Procédé de fabrication de pots par formage, dans lequel :

- on dispose d'une ligne de fabrication de pot par formage (300) selon l'une des revendications 11 à 13
- on amène, à partir de la bobine d'alimentation (311), une portion de feuille de matériau (312) en contact avec la face supérieure (101) d'une pluralité de moules ouvrants (100) alignés pour former au moins deux rangées de moules (210) s'étendant chacune selon une direction longitudinale (X) perpendiculaire à la direction de démoulage (D) desdits moules ouvrants, ladite portion de feuille de matériau étant reliée de manière continue à la bobine d'alimentation,
- on forme les pots (1) dans lesdits moules ouvrants.

**Patentansprüche**

1. Form (100), die insbesondere für eine Verwendung in einer Formvorrichtung (200) zum Formen mindestens eines hinterschnittenen Topfs (1) bestimmt ist, der eine Bodenwand (2) sowie eine in sich geschlossene und mit der Bodenwand (2) verbundene Seitenwand (3) aufweist, wobei die Seitenwand und die Bodenwand eine ein Topfinneres definierende Innenfläche (4) sowie eine der Innenfläche gegenüberliegende Außenfläche (5) aufweisen,
der Topf ferner eine Öffnung (6) aufweist, die Zugang zum Topfinneren bereitstellt, wobei die Öffnung (6) geeignet ist, um von einem oberen Verschluss (7) bedeckt zu werden, um das Innere des Topfs zu isolieren, wobei die Öffnung sich in einer horizontalen Ebene (H) erstreckt und eine vertikale Richtung (Z) definiert, die zur horizontalen Ebene (H) senkrecht ist, durch einen Schwerpunkt der Öffnung hindurchgeht und von der Bodenwand hin zur Öffnung orientiert ist,
die Außenfläche (5) der Seitenwand (3) des Topfs eine um die vertikale Richtung (Z) nicht rotationssymmetrische Hinterschneidungsform aufweist,
die Außenfläche (5) mindestens eine vertikale Entformungsebene (P) aufweist, derart, dass ein Hinterschneidungswert des Topfs an jeweiligen lateralen Enden des Topfs, bei einem maximalen lateralen Abstand der Außenfläche bezüglich der vertikalen Entformungsebene (P), kleiner ist als ein maximaler Wert einer Hinterschneidung des Topfs (1) an dem Umfang der Außenfläche (5) des Topfs,
die Form (100) eine erste Subform (110) und eine zweite Subform (120) aufweist, wobei die Subformen eingerichtet sind, entlang einer Entformungsrichtung (D) verschoben zu werden zwischen einer geschlossenen Position, in der die erste Subform und die zweite Subform in gegenseitigem Kontakt sind, und einer geöffneten Position, in der die Subformen voneinander beabstandet sind,
in der geschlossenen Position der Form die erste Subform und zweite Subform mindestens einen inneren Hohlraum (130) bilden, wobei der mindestens eine Hohlraum durch eine Hohlrauminnenfläche (131) definiert ist, die eine Innenfläche der ersten Subform (111) und eine Innenfläche der zweiten Subform (121) aufweist, wobei der Hohlraum an dem Ort einer oberen Fläche (101) der Form durch eine obere Öffnung (140) offen ist, die sich in einer horizontalen Ebene (H) erstreckt, die die Entformungsrichtung (D) aufweist, wobei die obere Öffnung eine vertikale Richtung des Hohlraums (Z) definiert, die zur horizontalen Ebene (H) senkrecht ist, durch einen Schwerpunkt der oberen Öffnung hindurchgeht und von einem Hohlraumboden hin zu der oberen Öffnung orientiert ist,
wobei die Form **dadurch gekennzeichnet ist, dass** die Hohlrauminnenfläche (131) in der geschlossenen Position eine um die vertikale Richtung (Z) nicht rotationssymmetrische Hinterschneidungsform aufweist,
die Innenfläche eine vertikale Entformungsebene (P) aufweist, die die vertikale Richtung (Z) sowie die Entformungsrichtung (D) enthält, und derart ist, dass ein Hinterschneidungswert der Form an jeweiligen lateralen Enden des inneren Hohlraums der Form, bei einem maximalen lateralen Abstand der Innenfläche bezüglich der vertikalen Entformungsebene (P), kleiner ist als ein maximaler Hinterschneidungswert der Form an dem Umfang der Innenfläche des inneren Hohlraums.

2. Form nach Anspruch 1, in welcher die vertikale Entformungsebene (P) derart ist, dass ein lateraler Abstand $E(t,z) = R(t,z)\sin(\theta(t,z))$ der Hohlrauminnenfläche (131) der Form in der geschlossenen Position bezüglich der Entformungsrichtung (D) eine konvexe Funktion ist, für t von 0 bis 1, mit einem maximalen Wert des lateralen Abstands $DM1(t1,z) = \max_{t \in [0,1]} E(t,z)$ an einer Position $t1(z)$ eines ersten Formöffnungsquerschnitts, die einem Ort des Kontakts zwischen jeweiligen ersten Öffnungsflächen der ersten Subform und der zweiten Subform entspricht, und eine

konkave Funktion ist, für t von 1 bis 2, mit einem maximalen Wert des lateralen Abstands $DM2(t2,z) = max_{t\in[1,2]}(-E(t,z))$ an einer Position $t2(z)$ eines zweiten Formöffnungsquerschnitts, die einem Ort des Kontakts zwischen jeweiligen zweiten Öffnungsflächen der ersten Subform und der zweiten Subform entspricht, wobei

z ein Abstand eines Punkts der Innenfläche des Hohlraums zum Hohlraumboden in der vertikalen Richtung (Z) ist,

$t\in[0,2]$ eine Umfangsposition eines Punkts der Innenfläche ist, derart, dass an einem Schnittpunkt zwischen der Innenfläche und der Entformungsrichtung (D) t=0 ist, an einem Schnittpunkt zwischen der Innenfläche und der zur Entformungsrichtung (D) entgegengesetzten Richtung t=1 ist, und beim Durchlaufen eines gesamten Umfangs der Innenfläche um die vertikale Richtung (Z) t von 0 bis 2 variiert,

$\theta(t,z)$ ein in der horizontalen Ebene (H) bezüglich der Entformungsrichtung (D) orientierter Winkel eines Punkts der Innenfläche an der Position t und der Höhe z ist, und

$R(t,z)$ eine Distanz eines Punkts der Innenfläche an der Position t und der Höhe z zur vertikalen Richtung (Z) in der horizontalen Ebene ist,

und die Innenfläche des Hohlraums aufweist:

- eine Höhe $z1 = argmax_z(DM1(t1(z),z))$ eines maximalen Abstands einer ersten Hinterschneidung am Ort des ersten Formöffnungsquerschnitts,
- eine Höhe $z1' = argmin_{z>z1}(DM1(t1(z),z))$ eines minimalen Abstands einer ersten Hinterschneidung am Ort des ersten Formöffnungsquerschnitts,
- eine Höhe $z2 = argmax_z(DM2(t2(z),z))$ eines maximalen Abstands einer zweiten Hinterschneidung am Ort des zweiten Formöffnungsquerschnitts,
- eine Höhe $z2' = argmin_{z>z2}(DM2(t2(z),z))$ eines minimalen Abstands einer zweiten Hinterschneidung am Ort des zweiten Formöffnungsquerschnitts.

3. Form nach Anspruch 2, in welcher

- ein erster Hinterschneidungsüberstand am Ort des ersten Formöffnungsquerschnitts $D1(t1) = R(t1(z1),z1) - R(t1(z1'),z1')$ kleiner ist als ein maximaler Überstand der ersten Hinterschneidung $D1_{max} = max_t(R(t,z1)) - min_t(R(t,z1'))$ am Umfang der Innenfläche des Hohlraums, und
- ein zweiter Hinterschneidungsüberstand am Ort des zweiten Formöffnungsquerschnitts $D2(t2) = R(t2(z1),z2) - R(t2(z2'),z2')$ kleiner ist als ein maximaler Überstand der zweiten Hinterschneidung $D2_{max} = max_t(R(t,z2)) - min_t(R(t,z2'))$ am Umfang der Innenfläche des Hohlraums.

4. Form nach Anspruch 2 oder 3, in welcher die Innenfläche des Hohlraums (131) derart ist, dass

- eine longitudinale Distanz der ersten Hinterschneidung an einer ersten Hohlraumhälfte $D1_{long}(t) = F(c1(t),z1) - F(t,z1')$ für $t\in[0,t1(z1')]$ ein lokales Minimum am Ort des ersten Formöffnungsquerschnitts $t=t1(z1')$ aufweist,
- eine longitudinale Distanz der ersten Hinterschneidung an einer zweiten Hohlraumhälfte $D1_{long}(t) = F(c2(t),z1) - F(t,z1')$ für $t\in[t1(z1'),1]$ ein lokales Minimum am Ort des ersten Formöffnungsquerschnitts $t=t1(z1')$ aufweist,
- eine longitudinale Distanz der zweiten Hinterschneidung an einer zweiten Hohlraumhälfte $D2_{long}(t) = F(c3(t),z2) - F(t,z2')$ für $t\in[1,t2(z2')]$ ein lokales Minimum am Ort des zweiten Formöffnungsquerschnitts $t=t2(z2')$ aufweist,
- eine longitudinale Distanz der zweiten Hinterschneidung an einer ersten Hohlraumhälfte $D2_{long}(t) = F(c4(t),z2) - F(t,z2')$ für $t\in[t2(z2'),2]$ ein lokales Minimum am Ort des zweiten Formöffnungsquerschnitts $t=t2(z2')$ aufweist,

wobei

$F(t,z) = R(t,z)cos(\theta(t,z))$ ein Längsabstand der Innenfläche des Hohlraums in der Entformungsrichtung (D) ist,

$c1(t)$ eine longitudinale Positionskonversion der ersten Hinterschneidung an einer ersten Hohlraumhälfte ist, derart, dass $sin(\theta(c1(t),z1))R(c1(t),z1) = sin(\theta(t,z1'))R(t,z1')$ für $t\in[0,t1(z1')]$,

$c2(t)$ eine longitudinale Positionskonversion der ersten Hinterschneidung an einer zweiten Hohlraumhälfte ist, derart, dass $sin(\theta(c2(t),z1))R(c2(t),z1) = sin(\theta(t,z1'))R(t,z1')$ für $t\in[t1(z1'),1]$,

$c3(t)$ eine longitudinale Positionskonversion der zweiten Hinterschneidung an einer zweiten Hohlraumhälfte ist, derart, dass $sin(\theta(c3(t),z2))R(c4(t),z2) = sin(\theta(t,z2'))R(t,z2')$ für $t\in[1,t2(z2')]$, und

$c4(t)$ eine longitudinale Positionskonversion der zweiten Hinterschneidung an einer ersten Hohlraumhälfte ist, derart, dass $sin(\theta(c4(t),z2))R(c3(t),z2) = sin(\theta(t,z2'))R(t,z2')$ für $t\in[t2(z2'),2]$.

5. Form nach einem der Ansprüche 2 bis 4, in welcher

- eine laterale Distanz einer ersten Hinterschnei-

dung $D1_{lat}(t) = E(d(t),z1) - E(t,z1')$ ein lokales Minimum am Ort des ersten Formöffnungsquerschnitts $t = t1(z1')$ aufweist, und
- eine laterale Distanz einer zweiten Hinterschneidung $D2_{lat}(t) = E(d(t),z2) - E(t,z2')$ ein lokales Minimum am Ort des zweiten Formöffnungsquerschnitts $t = t2(z2')$ aufweist,

wobei

d1(t) eine laterale Positionskonversion der ersten Hinterschneidung ist, derart, dass $d1(t) = argmax_t(0(t',z1)) = \theta(t,z1'))$, und
d2(t) eine laterale Positionskonversion der zweiten Hinterschneidung ist, derart, dass $d2(t) = argmax_t(\theta(t',z2) = \theta(t,z2'))$.

6. Form nach einem der Ansprüche 1 bis 5, in welcher in der geschlossenen Position der Form die erste Subform (110) und zweite Subform (120) mehrere Innenhohlräume (130) bilden, die in einer Längsrichtung (X) in einer Linie ausgerichtet sind.

7. Form nach einem der Ansprüche 1 bis 6, in welcher in der offenen Position die erste Subform (110) und die zweite Subform (120) in der Entformungsrichtung (D) voneinander beabstandet sind und zwar mit einer Öffnungsdistanz O, die zwischen dem ein- und dreifachen einer Summe ist, gebildet aus einer maximalen Hinterschneidungsdistanz der lateralen Wand in der Entformungsrichtung (D) und einer maximalen Hinterschneidungsdistanz der lateralen Wand in der zur Entformungsrichtung (D) entgegengesetzten Richtung.

8. Formvorrichtung (200), mindestens mit einer Form (100) nach einem der Ansprüche 1 bis 7.

9. Formvorrichtung nach Anspruch 8, mit mehreren Formen (100), die in einer Linie ausgerichtet sind, um mindestens zwei Formenreihen (210) zu bilden, die sich jeweils in einer Längsrichtung (X), die senkrecht zu der Entformungsrichtung (D) der Formen ist, erstrecken, wobei jede Formenreihe (210) eine oder mehrere Formen aufweist, die in der Längsrichtung (X) nebeneinander angeordnet sind, wobei in der Entformungsrichtung (D) die Formenreihen mit einer räumlichen Periode p angeordnet sind, wobei die räumliche Periode p kleiner ist als das eineinhalbfache einer maximalen Abmessung des inneren Hohlraums (131) einer Form (100) in der Entformungsrichtung (D).

10. Formvorrichtung nach Anspruch 8 oder 9, aufweisend ferner mindestens eine Abstandsblockierungsvorrichtung (240) zum Blockieren des Abstands der unter Druck gesetzten Formen, wobei die Abstandsblockierungsvorrichtung (240) einen ersten Nocken (241) und einen zweiten Nocken (242) aufweist, wobei in der geschlossenen Position der erste und zweite Nocken mit der ersten Subform (110) bzw. der zweiten Subform (120) einer Form in Kontakt kommen, um so eine relative Bewegung der Subformen in der Entformungsrichtung (D) zu verhindern, wobei der erste und zweite Nocken (241, 242) mit der ersten und zweiten Subform an einer Seite in Kontakt kommen, die entgegensetzt zu der oberen Fläche (101) der Form (100) in der vertikalen Richtung (Z) ist, um die obere Oberfläche der Form in der vertikalen Richtung (Z) nicht zu überragen.

11. Produktionslinie zum Herstellen von Töpfen mittels eines Formprozesses, aufweisend eine Formvorrichtung (200) nach einem der Ansprüche 8 bis 10 sowie Einrichtungen zum Zuführen eines Formmaterialbands (310) aus mindestens einer Vorratsspule (311), wobei die Einrichtungen zum Zuführen des Formmaterialbands eingerichtet sind, einen Materialbandabschnitt (312) in Kontakt mit der oberen Fläche (101) der Formen (100) zu bringen, wobei der Materialbandabschnitt auf kontinuierliche Weise mit der Vorratsspule (311) verbunden ist.

12. Produktionslinie zum Herstellen von Töpfen mittels eines Formprozesses nach Anspruch 11, in welcher der Materialbandabschnitt (312), der in Kontakt mit der oberen Fläche (101) der Formen (100) ist, mindestens zwei Formenreihen (210) der Formvorrichtung bedeckt.

13. Produktionslinie zum Herstellen von Töpfen mittels eines Formprozesses nach Anspruch 11 oder 12, ferner aufweisend Einrichtungen zum Zuführen eines Deckelbands (320) aus mindestens einer Vorratsspule (321), wobei die Einrichtungen zum Zuführen des Deckelbands eingerichtet sind, einen Deckelbandabschnitt (322) zuzuführen, so dass der Deckelbandabschnitt (322) der Öffnung (6) der in Reihen angeordneten und von der Töpfe-Formvorrichtung (200) geformten Töpfe (1) gegenüberliegt, wobei gegebenenfalls die Töpfe ihre Krägen (8) durch den Materialbandabschnitt miteinander verbunden haben, wobei der Deckelbandabschnitt auf kontinuierliche Weise mit der Vorratsspule verbunden ist,
die Linie ferner eine Vorrichtung zum Versiegeln der Töpfe (330) aufweist, die eingerichtet ist, den Deckelbandabschnitt mit dem Kragen der Töpfe in Kontakt zu bringen und ihn daran zu versiegeln.

14. Verfahren zur Produktion von Töpfen durch einen Formprozess, aufweisend:

- Bereitstellen einer Produktionslinie zum Herstellen von Töpfen mittels eines Formprozesses (300) nach einem der Ansprüche 11 bis 13,

- Bringen eines aus einer Vorratsspule (311) zugeführten Materialbandabschnitts (312) in Kontakt mit der oberen Fläche (101) einer Vielzahl von Formen (110), die angeordnet sind, um mindestens zwei Formenreihen (210) zu bilden, die sich jeweils in einer Längsrichtung (X) erstrecken, die senkrecht zur Entformungsrichtung (D) der Formen ist, wobei der Materialbandabschnitt auf kontinuierliche Weise mit der Vorratsspule verbunden ist,
- Formen der Töpfe (1) in den Formen.

**Claims**

1. Split mould (100) specially designed to be used in a moulding apparatus (200) for moulding at least one undercut pot (1) including a bottom wall (2) as well as a side wall (3) closed onto itself and connected to the bottom wall (2), the side wall and the bottom wall including an internal surface (4) defining a pot interior as well as an external surface (5) opposite to the internal surface,
the pot further comprising an opening (6) giving access to the pot interior, said opening (6) being suitable for being covered by a top fastener (7) to isolate the pot interior, the opening extending along a horizontal plane (H) and defining a vertical direction (Z), perpendicular to the horizontal plane (H), passing through a barycentre of the opening, and oriented from the bottom wall towards the opening,
the external surface (5) of the side wall (3) of the pot having a non-symmetrical undercut shape revolving about the vertical direction (Z),
said external surface (5) having at least one vertical mould release plane (P) such that an undercut value of the pot at respective lateral ends of the pot, of maximum lateral spacing of the external surface with respect to the vertical mould release plane (P), is less than a maximum undercut value of the pot (1) over the circumference of the external surface (5) of the pot,
the split mould (100) including a first sub-mould (110) and a second sub-mould (120), said sub-moulds being suitable for being moved along a mould release direction (D) between a closed position wherein the first sub-mould and the second sub-mould are in mutual contact and an open position wherein said sub-moulds are distant from one another,
said first sub-mould and second sub-mould forming at least one internal cavity (130) in the closed position of the mould, said at least one cavity being defined by an internal cavity surface (131) comprising an internal surface of the first sub-mould (111) and an internal surface of the second sub-mould (121), the cavity being open at the location of a top surface (101) of the split mould, by a top opening (140) extending along a horizontal plane (H) comprising the mould release direction (D),
the top opening defining a vertical direction of the cavity (Z), perpendicular to the horizontal plane (H), passing via a barycentre of said top opening, and oriented from a cavity bottom towards the top opening,
the split mould being **characterised in that** the internal cavity surface (131) in the closed position has a non-symmetrical undercut shape revolving about the vertical direction (Z),
said internal surface having at least one vertical mould release plane (P) comprising the vertical direction (Z) as well as the mould release direction (D) and being such that an undercut value of the mould at respective lateral ends of the internal cavity of the mould, of maximum lateral spacing of the internal surface with respect to the vertical mould release plane (P), is less than a maximum undercut value of the mould over the circumference of the internal surface of the internal cavity.

2. Split mould according to claim 1, wherein the vertical mould release plane (P) is such that a lateral spacing $E(t,z) = R(t,z)\sin(\theta(t,z))$ of the internal cavity surface (131) of the split mould in the closed position with respect to the mould release direction (D), is a function that is
convex for t varying from 0 to 1, with a maximum lateral spacing value $DM1(t1,z) = \max_{t \in [0,1]} E(t,z)$ at a first mould opening section position $t1(z)$ corresponding to a contact point between respective first opening surfaces of the first sub-mould and the second sub-mould, and
concave for t varying from 1 to 2, with a maximum lateral spacing value $DM2(t2,z) = \max_{t \in [1,2]}(-E(t,z))$ at a second mould opening section position $t2(z)$ corresponding to a contact point between respective second opening surfaces of the first sub-mould and the second sub-mould, where
z is a distance to the cavity bottom of a point of the internal surface of the cavity, along the vertical direction (Z),
$t \in [0,2]$ is a circumferential position of a point of the internal surface such that t = 0 at an intersection between the internal surface and the mould release direction (D), t = 1 at an intersection between the internal surface and the opposite direction to the mould release direction (D) and t varies from 0 to 2 on passing through a complete circumference of the internal surface about the vertical direction (Z), $\theta(t,z)$ is an angle oriented in the horizontal plane (H) with respect to the mould release direction (D) of a point of the internal surface at the position t and the height z, and
$R(t,z)$ is a distance to the vertical direction (Z), in a horizontal plane (H), of a point of the internal surface at the position t and the height z,
and the internal surface of the cavity has:

- a maximum first undercut spacing height $z1 = argmax_z(DM1(t1(z),z))$ at the location of the first mould opening section,
- a minimum first undercut spacing height $z1' = argmin_{z>z1}(DM1(t1(z),z))$ at the location of the first mould opening section,
- a maximum second undercut spacing height $z2 = argmax_z(DM2(t2(z),z))$ at the location of the second mould opening section,
- a minimum second undercut spacing height $z2' = argmin_{z>z2}(DM2(t2(z),z))$ at the location of the second mould opening section.

3. Split mould according to claim 2, wherein

    - a first undercut edge at the location of the first mould opening section $D1(t1) = R(t1(z1),z1) - R(t1(z1'),z1')$ is less than a maximum first undercut edge $D1_{max} = max_t(R(t,z1)) - min_t(R(t,z1'))$ over the circumference of the internal surface of the cavity, and
    - a second undercut edge at the location of the second mould opening section $D2(t2) = R(t2(z2),z2) - R(t2(z2'),z2')$ is less than a maximum second undercut edge $D2_{max} = max_t(R(t,z2)) - min_t(R(t,z2'))$ over the circumference of the internal surface of the cavity.

4. Split mould according to claim 2 or 3, wherein the internal surface of the cavity (131) is such that,

    - a longitudinal first undercut distance over a first cavity half $D1_{long}(t) = F(c1(t),z1) - F(t,z1')$ for $t \in [0,t1(z1')]$ has a local minimum at the location of the first mould opening section $t = t1(z1')$,
    - a longitudinal first undercut distance over a second cavity half $D1_{long}(t) = F(c2(t),z1) - F(t,z1')$ for $t \in [t1(z1'),1]$ has a local minimum at the location of the first mould opening section $t = t1(z1')$,
    - a longitudinal second undercut distance over a second cavity half $D2_{long}(t) = F(c3(t),z2) - F(t,z2')$ for $t \in [1,t2(z2')]$ has a local minimum at the location of the second mould opening section $t = t2(z2')$,
    - a longitudinal second undercut distance over a first cavity half $D2_{long}(t) = F(c4(t),z2) - F(t,z2')$ for $t \in [t2(z2'),2]$ has a local minimum at the location of the second mould opening section $t = t2(z2')$,

where

    $F(t,z) = R(t,z)cos(\theta(t,z))$ is a longitudinal spacing of the internal surface of the cavity along the mould release direction (D),
    c1(t) is a longitudinal first undercut position conversion over a first cavity half such that $sin(\theta(c1(t),z1))R(c1(t),z1) = sin(\theta(t,z'))R(t,z1')$ for $t \in [0,t1(z1')]$,
    c2(t) is a longitudinal first undercut position conversion over a second cavity half such that $sin(\theta(c2(t),z1))R(c2(t),z1) = sin(\theta(t,z1'))R(t,z1')$ for $t \in [t1(z1'), 1]$,
    c3(t) is a longitudinal second undercut position conversion over a second cavity half such that $sin(\theta(c3(t),z2))R(c4(t),z2) = sin(\theta(t,z2'))R(t,z2')$ for $t \in [1, t2(z2')]$, and
    c4(t) is a longitudinal second undercut position conversion over a first cavity half such that $sin(\theta(c4(t),z2))R(c3(t),z2) = sin(\theta(t,z2'))R(t,z2')$ for $t \in [t2(z2'), 2]$.

5. Split mould according to any one of claims 2 to 4, wherein

    - a lateral first undercut distance $D1_{lat}(t) = E(d(t),z1) - E(t,z1')$ has a local minimum at the location of the first mould opening section $t = t1(z1')$, and
    - a lateral second undercut distance $D2_{lat}(t) = E(d(t),z2) - E(t,z2')$ has a local minimum at the location of the second mould opening section $t = t2(z2')$,

where

    d1(t) is a lateral first undercut position conversion such that $d1(t) = argmax_t(\theta(t',z1) = \theta(t,z1'))$, and
    d2(t) is a lateral second undercut position conversion such that $d2(t) = argmax_t(\theta(t',z2) = \theta(t,z2'))$.

6. Split mould according to any one of claims 1 to 5, wherein said first sub-mould (110) and second sub-moulds (120) form, in the closed position of the mould, a plurality of internal cavities (130) aligned along a longitudinal direction (X).

7. Split mould according to any one of claims 1 to 6, wherein, in the open position, the first sub-mould (110) and the second sub-mould (120) are distant from one another, along the mould release direction (D) by an opening distance O between one and three times a sum between a maximum undercut distance from the lateral wall along the mould release direction (D) and a maximum undercut distance from the lateral wall along the opposite direction to the mould release direction (D).

8. Moulding apparatus (200) including at least one split mould (100) according to any one of claims 1 to 7.

9. Moulding apparatus according to claim 8, including a plurality of split moulds (100) aligned to form at least two rows of moulds (210) each extending along a longitudinal direction (X) perpendicular to the mould release direction (D) of said split moulds, each row of moulds (210) including one or more split moulds juxtaposed in the longitudinal direction (X), said rows of moulds being arranged with a spatial period p along the mould release direction (D), wherein said spatial period p is less than one and a half times a maximum dimension of the internal cavity (131) of a split mould (100) along the mould release direction (D).

10. Moulding apparatus according to claim 8 or 9, further including at least one spacing locking device (240) of the split moulds placed under pressure, said spacing locking device (240) including a first cam (241) and a second cam (242), said first and second cams coming respectively into contact with the first submould (110) and the second sub-mould (120) of a split mould in the closed position so as to prevent a relative movement of said sub-moulds along the mould release direction (D), said first and second cams (241, 242) coming into contact with said first and second sub-moulds by an opposite side to the top surface (101) of said split mould (100) along the vertical direction (Z) so as not to protrude from the top surface of said split mould in the vertical direction (Z).

11. Production line for moulding pots, including a moulding apparatus (200) according to one of claims 8 to 10 as well as means for conveying a sheet of moulding material (310) from at least one supply spool (311), the means for conveying said sheet of moulding material being suitable for conveying a material sheet portion (312) in contact with the top face (101) of the split moulds (100), said material sheet portion being connected continuously to the supply spool (311).

12. Production line for moulding pots according to claim 11, wherein said material sheet portion (312) in contact with the top face (101) of the split moulds (100) covers at least two rows (210) of split moulds of the moulding apparatus.

13. Production line for moulding pots according to claim 11 or 12, further including means for conveying a cover sheet (320) from at least one supply spool (321), said means for conveying a cover sheet being suitable for conveying a cover sheet portion (322) to face the opening (6) of rows of pots (1) moulded by the pot moulding apparatus (200), said pots having, if applicable, the collars (8) thereof connected to one another by the material sheet portion, said cover sheet portion being connected continuously to the supply spool, the line further including a pot sealing device (330) suitable for placing in contact and sealing said cover sheet portion with the collar of the pots.

14. Method for producing pots by moulding, wherein:

- a pot moulding production line (300) according to one of claims 11 to 13 is available,
- from the supply bobbin (311), a material sheet portion (312) is conveyed in contact with the top face (101) of a plurality of split moulds (100) aligned to form at least two rows of moulds (210) each extending along a longitudinal direction (X) perpendicular to the mould release direction (D) of said split moulds, said material sheet portion being connected continuously to the supply bobbin,
- the pots (1) are moulded in said split moulds.

FIG. 1A

FIG. 1B

FIG. 1C

FIG. 1D

**FIG. 2A**

**FIG. 2B**

FIG. 2C

FIG. 2D

FIG. 3A

FIG. 3B

FIG. 3C

FIG. 3D

FIG. 4A

FIG. 4B

1

**FIG. 4C**

110

101

H

111

**FIG. 4D**

Z

FIG. 5A

FIG. 5B

FIG. 5C

FIG. 5D

**FIG. 6A**

**FIG. 6B**

**FIG. 7A**

**FIG. 7B**

FIG. 8A

FIG. 8B

FIG. 9A

FIG. 9B

## FIG. 10

## FIG. 11A

**FIG. 11B**

**EP 3 326 782 B1**